# EUROPEAN PATENT SPECIFICATION

(11) **EP 4 281 379 B1**
(45) Date of publication and mention of the grant of the patent: **01.10.2025**
(21) Application number: 22805905.1
(22) Date of filing: 03.11.2022
(51) Int. Cl.: B65B 51/30, B29C 65/00, B65B 59/02, B65B 65/02, B65B 9/207

(54) **VERTICAL FORM FILL SEALING MACHINE AND METHOD FOR OPERATING THE VERTICAL FORM FILL SEALING MACHINE**
VERTIKALE FORMFÜLLSIEGELMASCHINE UND VERFAHREN ZUM BETREIBEN DER VERTIKALEN FORMFÜLLSIEGELMASCHINE
MACHINE D'ÉTANCHÉITÉ À REMPLISSAGE DE FORME VERTICALE ET PROCÉDÉ DE FONCTIONNEMENT DE LA MACHINE D'ÉTANCHÉITÉ À REMPLISSAGE DE FORME VERTICALE

(30) Priority: 05.11.2021 DE 102021128884
(43) Date of publication of application: 29.11.2023
(73) Proprietor: Syntegon Packaging Solutions B.V., 6001 SE Weert (NL)
(72) Inventor: HENNISSEN, Maurice, 6001 SE Weert (NL)
(74) Representative: Novagraaf Group
(86) International application number: PCT/EP2022/080631
(87) International publication number: WO 2023/078972

(56) References cited:
- EP-A1- 3 239 060
- WO-A1-2016/185875
- WO-A1-2017/086038
- WO-A1-2020/059312
- DE-A1- 102006 025 849
- JP-A- 2016 088 619
- US-A- 3 320 721
- US-A- 4 598 533
- US-A1- 2003 217 531

## Description

### State of the art

A vertical form fill sealing machine, comprising a machine frame and at least one transverse sealing device for sealing of a packaging material transversely, wherein the transverse sealing device is mounted on the machine frame such that it can be rotated around a rotation axis of the transverse sealing device at least substantially as a whole, and a guide unit to guide the rotation of the transverse sealing device around the rotation axis at least substantially as a whole has already been proposed. Such vertical form fill sealing machines are for example disclosed in US 3 320 721 A, US 3 332 206 A, JP 2016-94 223 A, WO 2016/185875 A1, EP 3 239 060 A1 and US 2003/02017531 A.

### Disclosure of the invention

The invention is based on a vertical form fill sealing machine comprising a machine frame and at least one transverse sealing device sealing of a packaging material transversely, wherein the transverse sealing device is mounted on the machine frame such that it can be rotated around a rotation axis of the transverse sealing device as a whole, and a guide unit to guide the rotation of the transverse sealing device around the rotation axis as a whole, wherein the guide unit comprises at least one guide element that delimits at least partially a circular cylindrical receiving area within which the transverse sealing device is at least substantially completely arranged, wherein the transverse sealing device comprises at least one movement unit, at least two sealing jaws and at least one guide unit to guide the at least two sealing jaws during a movement, wherein the at least one movement unit is provided for moving the at least two sealing jaws along a horizontal movement axis of the guide unit of the transverse sealing device and for moving the at least two sealing jaws along a vertical movement axis of the guide unit of the transverse sealing device, wherein the transverse sealing device comprises at least two drive units for driving the movement unit so as to generate a horizontal movement and/or a vertical movement of the at least two sealing jaws relative to a frame of the transverse sealing device and/or relative to the machine frame, wherein the guide unit has one or more bearing points, in which the frame of the transverse sealing device is movably connected to the guide unit.

All components of the transverse sealing device other than the frame are mounted on the frame of the transverse sealing device, wherein the frame of the transverse sealing device is arranged rotatably on the machine frame, wherein all components of the transverse sealing device are simultaneously rotatable around the rotation axis of the transverse sealing device relative to the machine frame. The term "substantially completely" is here in particular to mean at least 50%, preferably 75% and particularly preferably at least 90% of a total volume of an object, preferably of a total volume of a circular cylinder that just completely encloses the object, and/or a total mass of the object, in particular of the transverse sealing device. The guide unit of the vertical form fill sealing machine is preferably arranged at least partially on the machine frame. The at least one guide element of the guide unit of the vertical form fill sealing machine is preferably arranged on the machine frame. Particularly preferably, the at least one guide element of the guide unit of the vertical form fill sealing machine is implemented integrally with the machine frame. "Implemented integrally" is in particular to mean connected at least by substance-to-substance bond, for example by a welding process, a gluing process, an injection-molding process, and/or another process that is deemed expedient by someone skilled in the art, and/or advantageously formed in one piece, like for example by a production from a cast and/or by a production in a one-component or multi-component injection-molding procedure, and advantageously from a single blank. Alternatively, it is also conceivable that the guide element of the guide unit of the vertical form fill sealing machine is arranged in a detachable, in particular a non-destructive, manner on the machine frame. The at least one guide element of the guide unit of the vertical form fill sealing machine is in particular circle-shaped, at least viewed in a direction parallel to the rotation axis of the transverse sealing device. Preferably, the at least one guide element of the guide unit of the vertical form fill sealing machine has an annulus-form, particularly preferable an annulus-segment-form, at least viewed in the direction parallel to the rotation axis of the transverse sealing device. In particular, in at least one preferred embodiment, the at least one guide element of the guide unit of the vertical form fill sealing machine has a hollow-cylinder form, wherein the guide element of the guide unit of the vertical form fill sealing machine preferably has at each end of the hollow-cylinder-formed guide element of the guide unit of the vertical form fill sealing machine a protrusion, particularly preferable on an inside wall of the guide element of the guide unit of the vertical form fill sealing machine. The inside wall preferably is at least substantially circular-cylinder-shaped, in particular except from the protrusions. At least part of the transverse sealing device is in particular arranged between the protrusions of the guide element of the guide unit of the vertical form fill sealing machine, preferably in contact with the protrusions. Preferably, the at least one guide element of the guide unit of the vertical form fill sealing machine has a guide rail, a guide groove or the like, which is in particular at least in the preferred embodiment arranged on one of the protrusions of the guide element of the guide unit of the vertical form fill sealing machine. Alternatively or additionally, it is also conceivable that the guide element of the guide unit of the vertical form fill sealing machine has at least one guide knob, at least one guide stud or the like. Furthermore, it is also conceivable alternatively that the guide element of the guide unit of the vertical form fill sealing machine is implemented as a guide rail, a guide groove, a guide knob, a guide stud or the like. It is conceivable that the guide unit of the vertical form fill sealing machine comprises a plurality of guide elements, which are arranged in a circular manner. It is conceivable that the at least one guide element of the guide unit of the vertical form fill sealing machine has a plurality of snap-in points, in particular spaced-apart from each other, along a guide direction of the at least one guide element, wherein the transverse sealing device can be snapped in at the snap-in points. Alternatively, it is also conceivable that the at least one guide element of the guide unit of the vertical form fill sealing machine is free from any snap-in points. Preferably, the transverse sealing device can be fixed steplessly along the at least one guide element of the guide unit of the vertical form fill sealing machine, e.g. via a clamping connection or the like. In particular, the at least one guide element of the guide unit of the vertical form fill sealing machine is arranged on an inner wall of the machine frame. Preferably, the at least one guide element of the guide unit of the vertical form fill sealing machine is implemented integrally with the inner wall of the machine frame. Alternatively, it is also conceivable that the at least one guide element of the guide unit of the vertical form fill sealing machine is arranged detachably on the inner wall of the machine frame, in particular in a non-destructive manner. The inner wall of the machine frame is preferably arranged on a side of the machine frame that faces towards the transverse sealing device. It is conceivable, that the inner wall is at least partially circular cylindrical shaped. It is alternatively also conceivable, that the inner wall is plane or has a polygonal shape, at least viewed in a direction parallel to the rotation axis.

The guide unit of the vertical form fill sealing machine comprises in particular at least one further guide element, which is arranged on the transverse sealing device. The at least one further guide element of the guide unit of the vertical form fill sealing machine is implemented as a guide rail, a guide groove, a guide knob, a guide stud or the like. It is also conceivable that the guide unit of the vertical form fill sealing machine comprises a plurality of further guide elements, which are arranged on the transverse sealing device. The at least one further guide element of the guide unit of the vertical form fill sealing machine is preferably implemented correspondingly to the at least one guide element of the guide unit of the vertical form fill sealing machine. The at least one further guide element of the guide unit of the vertical form fill sealing machine is in particular arranged on a bottom side or a top side of the transverse sealing device, at least viewed in the direction parallel to the rotation axis. Alternatively, it is also conceivable that the at least one further guide element of the guide unit of the vertical form fill sealing machine is arranged laterally to the transverse sealing device, at least viewed in the direction parallel to the rotation axis. Preferably, the at least one further guide element of the guide unit of the vertical form fill sealing machine is implemented integrally with the transverse sealing device. Alternatively, it is also conceivable, that the at least one further guide element of the guide unit of the vertical form fill sealing machine is arranged detachably on the transverse sealing device, in particular in a non-destructive manner.

According to the invention, the guide unit of the vertical form fill sealing machine and/or the machine frame have/has one or more bearing points, in which the transverse sealing device, in particular a frame of the transverse sealing device, is movably connected to the guide unit of the vertical form fill sealing machine, and/or to the machine frame. In a preferred embodiment, at least one bearing point is arranged on a bottom side or a top side of the transverse sealing device, at least viewed in the direction parallel to the rotation axis, preferably on at least one of the protrusions of the guide element of the guide unit of the vertical form fill sealing machine. It is also conceivable that at least one bearing point is located laterally to the transverse sealing device. Alternatively or additionally, at least one bearing point is located centrally relative to the transverse sealing device on the bottom side or the top side of the transverse sealing device, at least viewed in the direction parallel to the rotation axis, in particular in such a way that the rotation axis of the transverse sealing device goes through the at least one bearing point.

The circular cylindrical shaped receiving area is in particular at least partially delimited by the inside wall of the guide element of the guide unit of the vertical form fill sealing machine. The protrusions of the guide element of the guide unit of the vertical form fill sealing machine in the preferred embodiment protrude in particular into the cylindrical shaped receiving area. Preferably, a curvature, in particular a curvature radius of the curvature, of the at least one guide element of the guide unit of the vertical form fill sealing machine, in particular of the inside wall of the guide element, is equivalent to a curvature, in particular a curvature radius of the curvature, of the circular cylindrical receiving area. The circular cylindrical receiving area is preferably encompassed along a circumferential direction of the circular cylindrical receiving area by the at least one guide element of the guide unit of the vertical form fill sealing machine, in particular the inside wall of the guide element, by at least 75°. The circumferential direction of the circular cylindrical receiving area preferably runs in a plane which is perpendicular to a main extension axis of the circular cylindrical receiving area. By a "main extension axis" of an object or an area is herein in particular an axis to be understood which extends parallel to a longest edge of a smallest geometric rectangular cuboid that just still completely encloses the object or the area respectively. It is conceivable, that the circular cylindrical receiving area is encompassed by the at least one guide element of the guide unit of the vertical form fill sealing machine, in particular the inside wall of the guide element, along the circumferential direction of the circular cylindrical receiving area by at least 90°, preferably by at least 135° and in particular by at least 180°. Alternatively, it is conceivable, that the circular cylindrical receiving area is encompassed by the at least one guide element of the guide unit of the vertical form fill sealing machine, in particular the inside wall of the at least one guide element, along the circumferential direction of the circular cylindrical receiving area by the at least one guide element of the guide unit of the vertical form fill sealing machine by less than 75°.

According to the invention, all components of the transverse sealing device are simultaneously rotatable around the rotation axis of the transverse sealing device, preferably relative to the machine frame. According to the invention, all components of the transverse sealing device other than the frame are mounted on the frame of the transverse sealing device. According to the invention, the frame of the transverse sealing device is arranged rotatably, on the machine frame. Particularly preferably, the transverse sealing device is mounted movably on the machine frame in such a way that the rotation axis of the transverse sealing device is positionally fixed relative to the machine frame, in particular independently from any operational movements of the transverse sealing device relative to the machine frame. In particular, the transverse sealing device is mounted on the machine frame in such a way that the transverse sealing device is merely movable at as a whole by a rotation of the transverse sealing device as a whole around the rotation axis of the transverse sealing device. Preferably, a rotation of the transverse sealing device as a whole relative to the machine frame is generatable free from any translational movements, in particular relative to the machine frame, of the transverse sealing device as a whole. In particular, the transverse sealing device is mounted on the machine frame in such a way that the transverse sealing device as a whole has only one degree of freedom to move. Alternatively, it is also conceivable that the transverse sealing device is mounted on the machine frame in such a way that the transverse sealing device can be moved translationally, in particular along a translational-movement axis of the transverse sealing device, preferably relative to the machine frame. The rotation axis of the transverse sealing device runs at least substantially perpendicularly to a support surface of the machine frame. The support surface of the machine frame is preferably intended to transmit weight forces of the vertical form fill sealing machine, in particular the machine frame, to a floor on which the vertical form fill sealing machine is arranged. The support surface of the machine frame is in particular part of a stand of the machine frame, of a bottom surface of the machine frame, or the like.

In particular, the transverse sealing device comprises the at least two sealing jaws. The at least two sealing jaws are preferably mounted movably on the frame of the transverse sealing device. The transverse sealing device comprises the guide unit for guiding the at least two sealing jaws during a horizontal and/or vertical movement relative to the frame. The transverse sealing device preferably comprises the at least one movement unit for moving the at least two sealing jaws, in particular translationally, preferably relative to each other, along a horizontal movement axis of the guide unit of the transverse sealing device and/or for moving the at least two sealing jaws, in particular translationally, along a vertical movement axis of the guide unit of the transverse sealing device. According to the invention, the transverse sealing device comprises at least two drive units for driving the movement unit so as to generate a horizontal movement and/or a vertical movement of the at least two sealing jaws, preferably relative to the frame and/or relative to the machine frame. Exemplarily, at least one drive unit of the at least two drive units of the transverse sealing device is implemented as an electromotor, as a pneumatic motor or as another drive unit that appears reasonable to a person skilled in the art.

Preferably, the horizontal movement axis of the guide unit of the transverse sealing device runs at least substantially perpendicularly to the rotation axis of the transverse sealing device. The term "substantially perpendicularly" is here in particular to mean an orientation of a direction relative to a reference direction, wherein the direction and the reference direction, in particular viewed in a projection plane, include a 90°-angle and the angle has a maximum deviation of in particular less than 8°, advantageously less than 5° and especially advantageously less than 2°. In particular, the vertical movement axis of the guide unit of the transverse sealing device runs at least substantially parallel to the rotation axis of the transverse sealing device. The term "substantially parallel" is here in particular to mean an orientation of a direction relative to a reference direction, in particular in a plane, wherein the direction has a deviation from the reference direction that is smaller than 8°, advantageously smaller than 5° and especially advantageously smaller than 2°. Preferably the at least two sealing jaws are configured to seal a packaging material, which is in particular arrangeable between the at least two sealing jaws. Each of the at least two sealing jaws has a sealing surface.

Preferably, the sealing surfaces of the at least two sealing jaws are arranged facing each other. The sealing surfaces of the at least two sealing jaws are preferably in contact with the packaging material in a sealing position of the at least two sealing jaws in order to create a sealing in the packaging material. In particular, the sealing surfaces of the at least two sealing jaws run at least substantially parallel to each other. Preferably, the horizontal movement axis of the guide unit of the transverse sealing device runs at least substantially perpendicularly to the sealing surfaces of the at least two sealing jaws. The sealing surfaces of the at least two sealing jaws preferably run parallel to the vertical movement axis of the guide unit of the transverse sealing device. The rotation axis of the transverse sealing device in particular runs at least substantially parallel to the sealing surfaces of the at least two sealing jaws.

Preferably the transverse sealing device can be positioned in at least two work positions for the purpose of a transverse sealing a packaging material by means of a stepless rotation of the transverse sealing device, as a whole, around the rotation axis relative to the machine frame . Preferably the stepless rotation of the transverse sealing device, as a whole, around the rotation axis relative to the machine frame is a pure rotation, particularly preferably free from any translational movements of the transverse sealing device relative to the machine frame, in particular from a work position of the at least two work positions to a further work position of the at least two work positions. In particular, the transverse sealing device is mounted on the machine frame in such a way that the transverse sealing device can be positioned in at least two work positions for a transverse sealing of a packaging material free of any translational movement of the transverse sealing device at least substantially as a whole, preferably relative to the machine frame. Preferably, the transverse sealing device can be positioned in the at least two work positions for a transverse sealing of a packaging material solely by means of the rotation of the transverse sealing device, as a whole, relative to the machine frame, in particular free from any additional, especially linearly guided, movements of the transverse sealing device, as a whole, relative to the machine frame. The at least two work positions of the transverse sealing device preferably differ in a rotational position of the transverse sealing device, as a whole, relative to the machine frame. Preferably the at least two work positions of the transverse sealing device differ from each other by an angle of 90°. Alternatively, it is also conceivable that the at least two work positions of the transverse sealing device differ from each otherby an angle that is different from 90°, preferably by an angle that greater than 0° and less than 360°. It is also conceivable that the transverse sealing device can be rotated over 360°, in particular by an integer or a non-integer multiple of 360°, relative to the machine frame. It is conceivable that energy supply lines of the vertical form fill sealing machine, which are configured for supplying the transverse sealing device with energy, are realized and/or arranged relative to the machine frame and/or the transverse sealing device such as to enable a 360° rotation, preferably a rotation over 360°, in particular a rotation by an integer or a non-integer multiple of 360°, of the transverse sealing device relative to the machine frame. Exemplarily the energy supply lines are arranged in combination with a slip ring, a rotary transformer, or the like of the vertical form fill sealing machine such as to enable a 360° rotation of the transverse sealing device relative to the machine frame. It is conceivable that the transverse sealing device is infinitely rotatable, as a whole, around the rotation axis in a variety of different work positions for a transverse sealing of a packaging material. Alternatively, it is also conceivable that the transverse sealing device is rotatable, as a whole, around the rotation axis of the transverse sealing device into fixed, in particular spaced-apart, rotational positions of the transverse sealing device relative to the machine frame, which in particular constitute different work positions of the transverse sealing device.

Preferably, the vertical form fill sealing machine comprises a drive unit for generating a rotation of the transverse sealing device as a whole around the rotation axis. Exemplarily, the drive unit of the vertical form fill sealing machine is implemented as an electromotor, as a pneumatic motor or as another drive unit that appears reasonable to a person skilled in the art. Preferably, the vertical form fill sealing machine comprises a control unit for controlling a driving force of the drive unit of the vertical form fill sealing machine. In particular, the control unit comprises at least a processor and a storage element as well as an operation program stored on the storage element. The storage element is preferably implemented as a digital storage element, for example as a hard disk or the like. Particularly preferably, the control unit controls the drive of the drive unit of the vertical form fill sealing machine automatically, in particular depending on a running operation program of the control unit. Alternatively or additionally, it is conceivable that the vertical form fill sealing device comprises an input unit for manually controlling the drive unit of the vertical form fill sealing machine in order to rotate the transverse sealing device, as a whole, around the rotation axis. Exemplarily, the input unit comprises a keyboard, a touchscreen, buttons, an adjustment wheel, or the like. It is conceivable that the input unit is attached to the machine frame or is part of an external unit such as a server, a smartphone, a laptop, a remote control, or the like, which in particular has a data connection to the control unit of the vertical form fill sealing machine. Furthermore, it is additionally or alternatively also conceivable that the vertical form fill sealing machine comprises at least one mechanical control element, which is configured to be operated manually by a user. Exemplarily, the at least one mechanical control element is implemented as a lever, as a mechanical adjustment wheel or the like. Preferably, the transverse sealing device is rotatable, as a whole, by means of the drive unit of the vertical form fill sealing machine and/or manually by means of the at least one mechanical control element during an operation of the vertical form fill sealing machine, in particular during a sealing of the packaging material and/or a filling of packages. Alternatively or additionally, it is also conceivable that the transverse sealing device is rotatable, as a whole, around the rotation axis of the transverse sealing device manually free from any addition mechanical control elements or the like. Additionally or alternatively, it is conceivable that the transverse sealing device is rotatable, as a whole, when the vertical form fill sealing machine does not fill packages and/or seal packaging material.

Advantageously, a form fill sealing machine with a particularly space-saving structure can be provided. Advantageously, the transverse sealing device can be rotated in a particularly space-saving manner. Advantageously, the transverse sealing device is arranged particularly compactly, which enables particularly comfortable maintenance and/or replacement of the transverse sealing device. Due to the compact design a torque that can be generated by a rotation of the transverse sealing device can be kept particularly small. Advantageously, a particularly component-friendly rotation of the transverse sealing device can be achieved. A particularly quick-moving rotation of the transverse sealing device can be achieved. Advantageously a particularly low drive force is sufficient to generate a rotation of the transverse sealing device.

Moreover, it is proposed that a, in particular the already aforementioned, main extension axis of the circular cylindrical receiving area is arranged within a proximity area of the rotation axis of the transverse sealing device. The proximity area of the rotation axis of the transverse sealing device preferably has a maximum extension starting from the rotation axis of the transverse sealing device, which is in particular oriented perpendicularly to the rotation axis of the transverse sealing device, whose value is maximally 20 %, particularly preferable maximally 10 %, of a value of a maximum transverse extent of the transverse sealing device. In particular, the maximum transverse extent of the transverse sealing device is oriented at least substantially perpendicularly to the vertical movement axis of the guide unit of the transverse sealing device, the rotation axis of the transverse sealing device and/or to the sealing surfaces of the at least two sealing jaws. Preferably the main extension axis of the circular cylindrical receiving area is equivalent to the rotation axis of the transverse sealing device. Advantageously, a particularly space-saving rotation of the transverse sealing device and a compact design of the transverse sealing device can be achieved by the arrangement of the main extension axis of the circular cylindrical receiving area in a proximity area of the rotation axis of the transverse sealing device.

Furthermore, it is proposed that the transverse sealing device comprises at least two, in particular the already aforementioned two, sealing jaws, wherein a, in particular the already aforementioned, main extension axis of the circular cylindrical receiving area is located in a proximity area of a sealing plane of the at least two sealing jaws. The proximity area of the sealing plane preferably has a maximum extension starting from the sealing plane, which is in particular oriented perpendicularly to the sealing plane, whose value is maximally 20 %, particularly preferable maximally 10 %, of a value of the maximum transverse extent of the transverse sealing device. The sealing plane of the at least two sealing jaws is in particular defined by the sealing surfaces of the at least two sealing jaws in a position in which the sealing surfaces of the at least two sealing jaws are directly adjacent to each other, preferably in contact with each other. Particularly preferably, the main extension axis of the circular cylindrical receiving area is located in the sealing plane of the at least two sealing jaws. In particular, the rotation axis is located in the sealing plane of the at least two sealing jaws. In particular, the rotation axis of the transverse sealing device intersects with a proximity area of a center point of the at least two sealing jaws relative to the sealing surfaces of the at least two sealing jaws, or goes through the center point of the sealing surfaces of the at least two sealing jaws. The proximity area of the center point preferably has a maximum extension starting from the center point whose value is maximally 20 %, particularly preferably maximally 10 %, of a value of a maximum transverse extent of the transverse sealing device. Advantageously the transverse sealing device can be rotated in a particularly space-saving manner. A particularly compact vertical form fill sealing machine with a rotatable transverse sealing device can be provided.

Moreover, it is proposed that the transverse sealing device has a central axis, which in particular intersects a center point of the transverse sealing device, wherein a, in particular the already aforementioned, main extension axis of the circular cylindrical receiving area is arranged in a proximity area of the central axis of the transverse sealing device. In particular, the center point of the transverse sealing device is the geometric center of the transverse sealing device. Preferably, the central axis of the transverse sealing device is equivalent to a main extension axis of the transverse sealing device. In particular, the central axis of the transverse sealing device is equivalent to the rotation axis of the transverse sealing device. Alternatively, it is also conceivable that the central axis of the transverse sealing device is different from the rotation axis of the transverse sealing device. The proximity area of the central axis of the transverse sealing device preferably has a maximum extension starting from the central axis of the transverse sealing device, which is in particular oriented perpendicularly to the central axis of the transverse sealing device, whose value is maximally 20 %, particularly preferable maximally 10 %, of a value of a maximum transverse extent of the transverse sealing device. Advantageously, the transverse sealing device can be rotated in a particularly space-saving manner. A particularly compact vertical form fill sealing machine with a rotatable transverse sealing device can be provided. The transverse sealing device can be arranged on the machine frame in such a manner, that at least substantially all parts of the transverse sealing device are particularly easy to reach. Maintenance work and/or a replacement of parts of the transverse sealing device can be carried out particularly conveniently.

Furthermore, it is proposed that the guide element of the guide unit of the vertical form fill sealing machine defines a circle-shaped guideway, wherein the transverse sealing device is arranged at least substantially completely within a circular cylinder corresponding to the circle-shaped guideway. In particular in the preferred embodiment, the circular cylinder corresponding to the circle-shaped guideway differs, especially in a radius, from the circular cylindrical receiving area. Alternatively it is also conceivable that the circular cylinder corresponding to the circle-shaped guideway is equivalent to the circular cylindrical receiving area. In particular it is conceivable alternatively, that the circular cylindrical shaped receiving area is at least partially delimited by the circle-shaped guideway of the guide element. The circle shaped guideway is preferably defined by the guide rail, the guide groove or the like of the guide element of the guide unit of the vertical form fill sealing machine or by a circular line along which the plurality of guide elements is arranged. Advantageously, a particularly compact arrangement of the transverse sealing device can be realized. The transverse sealing device can be arranged on the machine frame in such a manner, that at least substantially all parts of the transverse sealing device are particularly easy to reach. Maintenance work and/or a replacement of parts of the transverse sealing device can be carried out particularly conveniently.

Moreover, it is proposed that the transverse sealing device has at least partially a circle-shaped outside contour, at least viewed in a direction parallel to the rotation axis. Preferably, the outside contour of the transverse sealing device constitutes a full circle, at least viewed in the direction parallel to the rotation axis. In particular, a curvature, preferably at least a curvature radius of the curvature, of the at least partially circle-shaped outside contour is equivalent to the curvature, preferably the radius of the curvature, of the at least one guide element of the guide unit of the vertical form fill sealing machine, in particular the inside wall of the guide element, and/or a curvature, in particular a curvature radius, of a circular line along which the plurality of guide elements of the guide unit of the vertical form fill sealing machine is arranged, preferably at least viewed in the direction parallel to the rotation axis. The at least partially circle-shaped outside contour is preferably arranged on a side of the transverse sealing device that faces the machine frame, in particular the inner wall of the machine frame. Preferably, the frame of the transverse sealing device constitutes the at least partially circle-shaped outside contour of the transverse sealing device. Alternatively, it is also conceivable, that at least one of the at least two sealing jaws or another component of the transverse sealing device constitute/s the at least partially circle-shaped outside contour of the transverse sealing device. It is conceivable, that the transverse sealing device has a circular cylindrical outside wall. Advantageously, a particularly precise and compact rotation of the transverse sealing device as a whole can be realized.

Furthermore, it is proposed that the guide element of the guide unit of the vertical form fill sealing machine, in particular the inside wall of the guide element, encompasses the transverse sealing device in at least one rotational position of the transverse sealing device relative to the guide element of the guide unit of the vertical form fill sealing machine by at least 75° along a circumferential direction of the transverse sealing device. The circumferential direction of the transverse sealing device preferably runs in a plane which is perpendicular to the rotation axis of the transverse sealing device. It is conceivable that the guide element of the guide unit of the vertical form fill sealing machine, in particular the inside wall of the guide element encompasses the transverse sealing device in at least one further rotational position of the transverse sealing device relative to the guide element, by less than 270°, particularly preferably by less than 180° or alternatively by less than 75°, along the circumferential direction of the transverse sealing device. Preferably, the at least one guide element of the guide unit of the vertical form fill sealing machine encompasses the transverse sealing device in the at least one rotational position of the transverse sealing device relative to the guide element, by at least 90°. It is also conceivable that the at least one guide element of the guide unit of the vertical form fill sealing machine encompasses the transverse sealing device in the at least one rotational position of the transverse sealing device relative to the guide element by at least 180° and particularly preferably by 360° along the circumferential direction of the transverse sealing device. It is also conceivable that a maximum extension of an arrangement region of the plurality of guide elements of the guide unit of the vertical form fill sealing machine along the circular line encompasses the transverse sealing device in at least one rotational position of the transverse sealing device relative to the plurality of guide elements, by at least 75° along the circumferential direction of the transverse sealing device. It is also conceivable that the plurality of guide elements of the guide unit of the vertical form fill sealing machine is arranged along the circular line, wherein the maximum extension of the arrangement region of the plurality of guide elements of the guide unit of the vertical form fill sealing machine along the circular line encompasses the transverse sealing device in at least one further rotational position of the transverse sealing device relative to the plurality of guide elements, by less than 270°, particularly preferably by less than 180° or alternatively by less than 75°, along the circumferential direction of the transverse sealing device. It is conceivable, that the maximum extension of the arrangement region of the plurality of guide elements of the guide unit of the vertical form fill sealing machine along the circular line encompasses the transverse sealing device in the at least one rotational position of the transverse sealing device relative to the plurality of guide elements, by at least 90°, particularly preferably by at least 180° and especially preferentially by 360° along the circumferential direction of the transverse sealing device. Advantageously a particularly precise and secure rotation of the transverse sealing device as a whole can be realized.

Moreover, it is proposed that the vertical form fill sealing machine comprises a filling station with at least one filling tube for filling a package with content, wherein a, in particular the already aforementioned, main extension axis of the circular cylindrical receiving area is arranged within a proximity area of a central axis of the filling tube, and is in particular equivalent to the central axis of the filling tube. Preferably, the rotation axis is arranged in the proximity area of the central axis of the filling tube. It is also conceivable that the central axis of the filling tube is equivalent to a main extension axis of the filling tube. The central axis of the filling tube is particularly preferably equivalent to a main output axis of the filling tube. The proximity area of the central axis of the filling tube preferably has a maximum extension starting from the central axis of the filling tube, which is in particular oriented perpendicularly to the central axis of the filling tube, whose value is maximally 20 %, particularly preferably maximally 10 %, of a value of the maximum transverse extent of the transverse sealing device. In particular, the central axis of the filling tube runs at least substantially parallel to the rotation axis of the transverse sealing device and/or the main extension axis of the at least substantially circular cylindrical receiving area. Preferably, the filling station is arranged in such a way that the vertical movement axis of the guide unit of the transverse sealing device intersects with the filling station. In particular, the central axis of the filling tube runs at least substantially parallel to the vertical movement axis of the guide unit of the transverse sealing device and/or the sealing surfaces of the at least two sealing jaws. Advantageously a particularly compact form fill sealing machine can be provided. Advantageously a package can be filled during a particularly space-saving rotation of the transverse sealing device relative to the filling tube.

Beyond this it is proposed that the guide element of the guide unit of the vertical form fill sealing machine has a, in particular the already aforementioned, guide groove with an undercut. Preferably at least in the preferred embodiment, the at least one further guide element of the guide unit of the vertical form fill sealing machine is implemented in such a way, that the further guide element engages in the undercut of the guide groove. Alternatively it is also conceivable, that the guide groove of the guide element of the guide unit of the vertical form fill sealing machine is implemented free from an undercut. Advantageously, a particularly safe connection between the transverse sealing the device and the machine frame can be realized. Advantageously, a guide element can be provided by means of which an unintentional release of an element from the guide rail can be counteracted particularly efficiently and simply.

Furthermore, a method for operating a vertical form fill sealing machine according to the invention, is proposed, wherein at least two sealing jaws, in particular the aforementioned two sealing jaws, of a, in particular the aforementioned, transverse sealing device of the vertical form fill sealing machine are moved along a vertical movement axis of a, in particular the aforementioned, guide unit of the transverse sealing device and/or along a horizontal movement axis of the guide unit of the transverse sealing device via a, in particular the aforementioned, movement unit of the transverse sealing device, wherein the transverse sealing device is at least substantially completely arranged in an circular cylindrical receiving area delimited at least partially by an, in particular the aforementioned, at least one guide element of the guide unit. According to the invention, in one process step a, in particular the already aforementioned, transverse sealing device of the vertical form fill sealing machine is rotated as a whole around an, in particular the already aforementioned, rotation axis of the transverse sealing device relative to an, in particular the already aforementioned, machine frame of the vertical form fill sealing machine. It is conceivable that in one process step the transverse sealing device is rotated substantially as a whole during a sealing of the packaging material and/or a filling of packages, preferably by means of the drive unit of the vertical form fill sealing machine and/or manually by the at least one mechanical control element. It is also conceivable that in one process step the transverse sealing device is rotated as a whole when the vertical form fill sealing machine is does not fill packages and/or seal packaging material, preferably by means of the drive unit of the vertical form fill sealing machine and/or manually by the at least one mechanical control element. Preferably, in one process step the transverse sealing device is rotated as a whole through an angle of 90° around the rotation axis of the transverse sealing device relative to the machine frame. Alternatively, it is also conceivable that in one process step the transverse sealing device is rotated as a whole around the rotation axis of the transverse sealing device through an angle other than 90° relative to the machine frame. In particular in one process step the transverse sealing device is steplessly rotated, as a whole, around the rotation axis from one work position of the transverse sealing device for a transverse sealing of a packaging material to a further work position of the transverse sealing device for a transverse sealing of a packaging material. In particular, in one process step the transverse sealing device is rotated as a whole around the rotation axis of the transverse sealing device that is positionally fixed relative to the machine frame of the vertical form fill sealing machine from the one work position of the transverse sealing device for a transverse sealing of a packaging material to the further work position of the transverse sealing device for a transverse sealing of a packaging material. Particularly preferably, in one process step the transverse sealing device is rotated as a whole around the rotation axis of the transverse sealing device, in particular by means of the drive unit of the vertical form fill sealing machine and/or manually by means of the at least one mechanical control element, from the work position to the further work position free from any translational movement of the transverse sealing device relative to the machine frame. Advantageously a particularly fast, easy and space-saving rotation of the transverse sealing device, as a whole, relative to the machine frame can be realized. Advantageously, a particularly flexible operation of a transverse sealing device can be realized.

### Drawing

Further advantages will become apparent from the following description of the drawing. In the drawing seven exemplary embodiments of the invention are illustrated.

It is shown in:
- Fig. 1: A section of a vertical form fill sealing machine according to the invention with a transverse sealing device according to the invention, in a schematic representation,
- Fig. 2: A section of the vertical form fill sealing machine according to the invention, in another schematic representation,
- Fig. 3: the transverse sealing device according to the invention, in a detailed schematic representation,
- Fig. 4: a schematic flow chart of a method for operating the form fill sealing machine according to the invention,
- Fig. 5: a schematic flow chart of a method for operating the transverse sealing device according to the invention,
- Fig. 6: a transverse sealing device according to the invention in a first alternative embodiment,
- Fig. 7: a transverse sealing device according to the invention in a second alternative embodiment,
- Fig. 8: a schematic flow chart of a method for operating the transverse sealing device according to the invention in the second alternative embodiment,
- Fig. 9a: a movement diagram for a vertical movement of at least two sealing jaws of the transverse sealing device according to the invention in the second alternative embodiment,
- Fig. 9b: a movement diagram for a horizontal movement of the at least two sealing jaws of the transverse sealing device according to the invention in the second alternative embodiment,
- Fig. 10: a transverse sealing device according to the invention in a third alternative embodiment,
- Fig. 11: a transverse sealing device according to the invention in a fourth alternative embodiment,
- Fig. 12: a transverse sealing device according to the invention in a fifth alternative embodiment, and
- Fig. 13: a transverse sealing device in a sixth alternative embodiment.

### Description of the exemplary embodiments

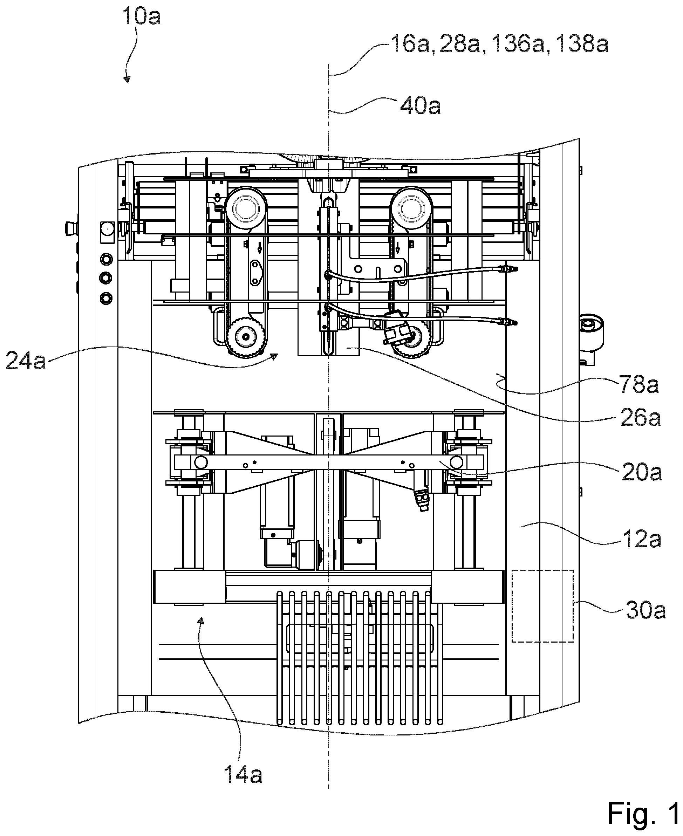

In figure 1 a vertical form fill sealing machine 10a is shown. The vertical form fill sealing machine 10a comprises a machine frame 12a. The vertical form fill sealing machine 10a comprises at least one transverse sealing device 14a for a transverse sealing of a packaging material. The vertical form fill sealing machine 10a comprises at least one supply station (not shown here) having components configured for holding a roll of packaging material. The vertical form fill sealing machine comprises a form shoulder (not shown here) for transforming the packaging material into a tube. The vertical form fill sealing machine comprises a longitudinal sealing device (not shown here) for a longitudinal sealing of the packaging material. The vertical form fill sealing machine 10a comprises a filling station 24a. The filling station 24a comprises at least one filling tube 26a that is configured to fill a package with content. The filing station 24a, the supply station, the transverse sealing device 14a and/or the longitudinal sealing device are attached to the machine frame 12a of the vertical form fill sealing machine 10a.

The transverse sealing device 14a is mounted on the machine frame 12a so that it can be rotated around a rotation axis 16a of the transverse sealing device 14a at least substantially as a whole. At least substantially all components of the transverse sealing device 14a are simultaneously rotatable around the rotation axis 16a of the transverse sealing device 14a, in particular relative to the machine frame 12a. The transverse sealing device 14a comprises a frame 70a. All components of the transverse sealing device 14a other than the frame 70a are mounted on the frame 70a of the transverse sealing device 14a. The frame 70a of the transverse sealing device 14a is arranged rotatably, on the machine frame 12a.

The transverse sealing device 14a is mounted rotatably, on the machine frame 12a in such a way that the rotation axis 16a of the transverse sealing device 14a is positionally fixed relative to the machine frame 12a, in particular independently from any operational movements of the transverse sealing device 14a relative to the machine frame 12a. The transverse sealing device 14a is mounted on the machine frame 12a in such a way that the transverse sealing device 14a is only movable at least substantially as a whole by a rotation of the transverse sealing device 14a substantially as a whole around the rotation axis 16a of the transverse sealing device 14a. A rotation of the transverse sealing device 14a substantially as a whole relative to the machine frame 12a is generatable free from any translational movements of the transverse sealing device 14a at least substantially as a whole, in particular relative to the machine frame 12a. The transverse sealing device 14a is mounted on the machine frame 12a in such a way that the transverse sealing device 14a, substantially as a whole, has only one degree of freedom to move. Alternatively, it is also conceivable that the transverse sealing device 14a is mounted on the machine frame 12a in such a way that the transverse sealing device 14a can be moved translationally, in particular along a direction parallel to a translational movement axis of a guide unit 82a of the transverse sealing device 14a, in particular relative to the machine frame 12a. The rotation axis 16a of the transverse sealing device 14a runs at least substantially perpendicularly to a support surface of the machine frame 12a. The support surface of the machine frame 12a is configured to transmit weight forces of the vertical form fill sealing machine 10a, in particular the machine frame 12a, to a floor, on which the vertical form fill sealing machine 10a is arranged. The support surface of the machine frame 12a is in particular part of a stand of the machine frame 12a, of a bottom surface of the machine frame 12a or the like.

The transverse sealing device 14a is positionable in at least two work positions for a transverse sealing of a packaging material by means of a stepless rotation of the transverse sealing device 14a relative to the machine frame 12a around the rotation axis 16a. Preferably the stepless rotation of the transverse sealing device 14a, at least substantially as a whole, relative to the machine frame 12a around the rotation axis 16a is a pure rotation, particularly preferably free from any translational movements of the transverse sealing device 14a relative to the machine frame 12a, in particular from one work position of the at least two work positions to a further work position of the at least two work positions. The transverse sealing device 14a is mounted on the machine frame 12a in such a way that the transverse sealing device 14a can be positioned in at least two work positions for a transverse sealing of a packaging material free of any translational movement of the transverse sealing device 14a at least substantially as a whole, in particular relative to the machine frame 12a. The transverse sealing device 14a is positionable in the at least two work positions for a transverse sealing of a packaging material solely by means of the rotation of the transverse sealing device 14a, at least substantially as a whole, relative to the machine frame 12a, in particular free from any additional, especially linearly guided, movements of the transverse sealing device 14a at least substantially as a whole relative to the machine frame 12a. The at least two work positions of the transverse sealing device 14a differ in a rotational position of the transverse sealing device 14a, in particular at least substantially as a whole, relative to the machine frame 12a. The at least two work positions of the transverse sealing device 14a differ from each other by an angle of 90°. Alternatively, it is also conceivable that the at least two work positions of the transverse sealing device 14a differ from each other by an angle different from 90°, preferably by an angle greater than 0° and less than 360°. **It** is also conceivable that the transverse sealing device 14a can be rotated over 360°, in particular by an integer or a non-integer multiple of 360°, relative to the machine frame 12a. It is conceivable that energy supply lines of the vertical form fill sealing machine 10a for supplying the transverse sealing device 14a with energy are implemented and/or arranged relative to the machine frame 12a and/or the transverse sealing device 14a such as to enable a 360° rotation, preferably a rotation over 360°, in particular a rotation by an integer or a non-integer multiple of 360°, of the transverse sealing device 14a relative to the machine frame 12a. Exemplarily the energy supply lines are arranged in combination with a slip ring, a rotary transformer or the like of the vertical form fill sealing machine 10a such as to enable a 360° rotation of the transverse sealing device 14a relative to the machine frame 12a. It is conceivable that the transverse sealing device 14a is infinitely rotatable at least substantially as a whole around the rotation axis 16a in a variety of different work positions for a transverse sealing of a packaging material. Alternatively, it is also conceivable that the transverse sealing device 14a is rotatable at least substantially as a whole around the rotation axis 16a of the transverse sealing device 14a into fixed, in particular spaced-apart, rotational positions of the transverse sealing device 14a relative to the machine frame 12a, which in particular constitute different work positions of the transverse sealing device 14a.

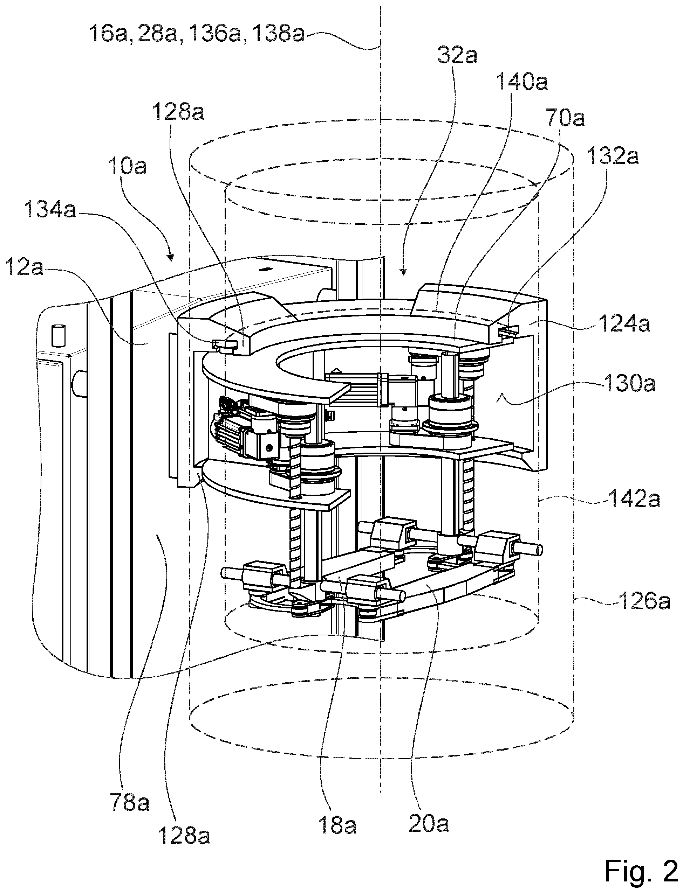

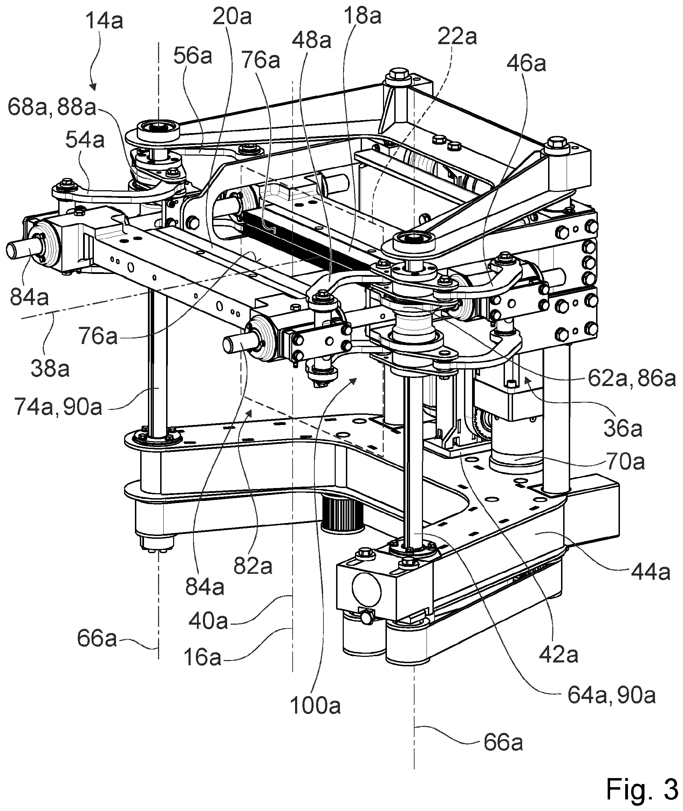

Figure 2 shows a schematic structure of the transverse sealing device that is at least partially different form an actual implementation of the transverse sealing device 14a, which is shown in Figure 3. However, Figure 2 illustrates the interaction of a guide unit 32a of the vertical form fill sealing machine 10a with the transverse sealing device 14a. The guide unit 32a of the vertical form fill sealing machine 10a is intended to guide the rotation of the transverse sealing device 14a around the rotation axis 16a at least substantially as a whole. The guide unit 32a of the vertical form fill sealing machine 10a comprises at least one guide element 124a. The at least one guide element 124a delimits at least partially an circular cylindrical receiving area 126a within which the transverse sealing device 14a is at least substantially completely arranged. The term "substantially completely" is here in particular to mean at least 50%, preferably 75% and particularly preferably at least 90% of a total volume of an object, preferably of a total volume of a circular cylinder that just completely encloses the object, and/or a total mass of the object, in particular of the transverse sealing device. The guide unit 32a of the vertical form fill sealing machine 10a is at least partially arranged on the machine frame 12a.

The at least one guide element 124a is arranged on the machine frame 12a. The at least one guide element 124a is implemented integrally with the machine frame 12a. "Implemented integrally" is in particular to mean connected at least by substance-to-substance bond, for example by a welding process, a gluing process, an injection-molding process, and/or another process that is deemed expedient by someone skilled in the art, and/or advantageously formed in one piece, like for example by a production from a cast and/or by a production in a one-component or multi-component injection-molding procedure, and advantageously from a single blank. Alternatively, it is also conceivable that the guide element 124a is arranged in a detachable, in particular a non-destructive, manner on the machine frame 12a. The at least one guide element 124a is circle-shaped, at least viewed in a direction parallel to the rotation axis 16a of the transverse sealing device 14a. The at least one guide element 124a has an annulus-form, particularly preferable an annulus-segment-form, at least viewed in the direction parallel to the rotation axis 16a of the transverse sealing device 14a. The at least one guide element 124a has a hollow-cylinder form, wherein the guide element 124a has at each end of the hollow-cylinder-formed guide element 124a a protrusion 128a, in particular on an inside wall 130a of the guide element 124a. The inside wall 130a is circular-cylinder-shaped, in particular except from the protrusions 128a. At least part of the transverse sealing device 14a is arranged between the protrusions 128a of the guide element 124a, preferably in contact with the protrusions 128a. The at least one guide element 124a has a guide groove 132a. The guide groove 132a is arranged on one of the protrusions 132a of the guide element 124a. Alternatively or additionally, it is also conceivable that the guide element 124a has at least one guide knob, at least one guide stud or the like. Furthermore, it is also conceivable alternatively that the guide element 124a is implemented as a guide rail, a guide groove, a guide knob, a guide stud or the like. Alternatively, it is also conceivable that the guide unit 32a of the vertical form fill sealing machine 10a comprises a plurality of guide elements 124a, which are arranged in a circular manner. The guide groove 132a has an undercut. Alternatively it is also conceivable, that the guide groove 132a of the guide element 124a is implemented free from an undercut.

It is conceivable that the at least one guide element 124a has a plurality of snap-in points, in particular spaced-apart from each other, along a guide direction of the at least one guide element 124a, wherein the transverse sealing device 14a can be snapped in at the snap-in points. Alternatively, it is also conceivable that the at least one guide element 124a is free from any snap-in points. Preferably, the transverse sealing device 14a can be fixed steplessly along the at least one guide element 124a, e.g. via a clamping connection or the like. The at least one guide element 124a is arranged on an inner wall 78a of the machine frame 12a. The at least one guide element is implemented integrally with the inner wall 78a of the machine frame 12a. Alternatively it is also conceivable, that the at least one guide element 124a of the guide unit 32a of the vertical form fill sealing machine 10a is arranged detachably on the inner wall 78a of the machine frame 12a, in particular in a non-destructive manner. The inner wall 78a of the machine frame 12a is arranged on a side of the machine frame 12a that faces towards the transverse sealing device 14a. The inner wall 78a is plane. Alternatively, it is also conceivable that the inner wall 78a is at least partially circular cylindrical shaped or has a polygonal shape, at least viewed in the direction parallel to the rotation axis 16a.

The guide unit 32a of the vertical form fill sealing machine 10a comprises at least one further guide element 134a, which is arranged on the transverse sealing device 14a. The at least one further guide element 134a is implemented as a guide knob. The at least one further guide element 134a is implemented in such a way, that the further guide element 134a engages in the undercut of the guide groove 132a. Alternatively it is also conceivable that the at least one further guide element 134a is implemented as a guide rail, a guide groove, a guide stud or the like. It is also conceivable that the guide unit 32a of the vertical form fill sealing machine 10a comprises a plurality of further guide elements 134a, which are arranged on the transverse sealing device 14a. The at least one further guide element 134a is implemented correspondingly to the at least one guide element 124a. The at least one further guide element 134a is arranged on a bottom side or a top side of the transverse sealing device 14a, at least viewed in the direction parallel to the rotation axis 16a. Alternatively it is also conceivable that the at least one further guide element 134a is arranged laterally to the transverse sealing device 14a, at least viewed in the direction parallel to the rotation axis 16a. The at least one further guide element 134a is implemented integrally with the transverse sealing device 14a. Alternatively it is also conceivable, that the at least one further guide element 134a of the guide unit 32a of the vertical form fill sealing machine 10a is arranged detachably on the transverse sealing device 14a, in particular in a non-destructive manner.

The guide unit 32a of the vertical form fill sealing machine 10a and/or the machine frame 12a have/has one or more bearing points, in which the transverse sealing device 14a, in particular the frame 70a of the transverse sealing device 14a, is movably connected to the guide unit 32a of the vertical form fill sealing machine 10a and/or to the machine frame 12a. At least one bearing point is arranged on the bottom side or the top side of the transverse sealing device 14a, at least viewed in the direction parallel to the rotation axis 16a, preferably on at least one of the protrusions 128a of the guide element 124a. It is also conceivable alternatively that at least one bearing point is located laterally to the transverse sealing device 124a. Alternatively or additionally, at least one bearing point is located centrally relative to the transverse sealing device 14a on the bottom side or the top side of the transverse sealing device 14a, at least viewed in the direction parallel to the rotation axis 16a, in particular in such a way that the rotation axis 16a of the transverse sealing device 14a goes through the at least one bearing point.

The circular cylindrical shaped receiving area 126a is at least partially delimited by the inside wall 130a of the guide element 124a. The protrusions 128a of the guide element 124a protrude into the cylindrical shaped receiving area 126a. A curvature, in particular a curvature radius of the curvature, of the at least one guide element 124a, in particular of the inside wall 130a of the guide element 124a, is equivalent to a curvature, in particular a curvature radius of the curvature, of the circular cylindrical receiving area 126a. The circular cylindrical receiving area 126a is encompassed along a circumferential direction of the circular cylindrical receiving area 126a by the at least one guide element 124a, in particular the inside wall 130a of the guide element 124a, by at least 75°, preferably by at least 90 °. The circumferential direction of the circular cylindrical receiving area 126a runs in a plane which is perpendicular to a main extension axis 136a of the circular cylindrical receiving area 126a. By a "main extension axis" of an object or an area is herein in particular an axis to be understood which extends parallel to a longest edge of a smallest geometric rectangular cuboid that just still completely encloses the object or the area respectively. It is also conceivable alternatively, that the circular cylindrical receiving area 126a is encompassed by the at least one guide element 124a, in particular the inside wall 130a of the guide element 124a, along the circumferential direction of the circular cylindrical receiving area 126a by at least 135° and preferably by at least 180°. Alternatively, it is also conceivable, that the circular cylindrical receiving area 126a is encompassed by the at least one guide element 124a, in particular the inside wall 130a of the at least one guide element 124a, along the circumferential direction of the circular cylindrical receiving area 126a by the at least one guide element 124a by less than 75°.

The main extension axis 136a of the circular cylindrical receiving area 124a is arranged within a proximity area of the rotations axis 16a of the transverse sealing device 14a. The proximity area of the rotation axis 16a of the transverse sealing device 14a has a maximum extension starting from the rotation axis 16a of the transverse sealing device 14a, which is in particular oriented perpendicularly to the rotation axis of the transverse sealing device, whose value is maximally 20 %, particularly preferable maximally 10 %, of a value of a maximum transverse extent of the transverse sealing device 14a. The maximum transverse extent of the transverse sealing device 14a is oriented at least substantially perpendicularly to the vertical movement axis 40a of the guide unit 82a of the transverse sealing device 14a and/or to the rotation axis 16a of the transverse sealing device 14a. The main extension axis 136a of the circular cylindrical receiving area 124a is equivalent to the rotation axis 16a of the transverse sealing device 14a.

The transverse sealing device 14a comprises at least two sealing jaws 18a, 20a. Each of the at least two sealing jaws 18a, 20a has a sealing surface 76a. The sealing surfaces 76a of the at least two sealing jaws 18a, 20a are arranged facing each other. The sealing surfaces 76a of the at least two sealing jaws 18a, 20a are in contact with the packaging material in the sealing position in order to create a sealing in the packaging material. The sealing surfaces 76a of the at least two sealing jaws 18a, 20a run at least substantially parallel to each other. The main extension axis 136a of the circular cylindrical receiving area 124a is located in a proximity area of a sealing plane 22a of the at least two sealing jaws 18a, 20a. The rotation axis 16a is located in the sealing plane 22a of the at least two sealing jaws 18a, 20a. The sealing plane 22a of the at least two sealing jaws 18a, 20a is in particular defined by the sealing surfaces 76a of the at least two sealing jaws 18a, 20a in a position in which the sealing surfaces 76a of the at least two sealing jaws 18a, 20a are directly adjacent to each other, preferably in contact with each other. The proximity area of the sealing plane 22a has a maximum extension starting from the sealing plane 22a, which is in particular oriented perpendicularly to the sealing plane 22a, whose value is maximally 20 %, particularly preferably maximally 10 %, of a value of the maximum transverse extent of the transverse sealing device 14a. The main extension axis 136a of the circular cylindrical receiving area 124a is located in the sealing plane 22a of the at least two sealing jaws 18a, 20a. The rotation axis 16a of the transverse sealing device 14a intersects with a proximity area of a center point of the at least two sealing jaws 18a, 20a relative to the sealing surfaces 76a of the at least two sealing jaws 18a, 20a or goes through the center point of the sealing area of the sealing surfaces 76a of the at least two sealing jaws 18a, 20a. The proximity area of the center point preferably has a maximum extension starting from the center point, whose value is maximally 20 % of a value of a maximum transverse extent of the transverse sealing device 14a. In particular, the maximum transverse extent of the transverse sealing device 14a runs at least substantially perpendicularly to the vertical movement axis 40a of the guide unit 82a of the transverse sealing device 14a and/or to the sealing surfaces 76a of the at least two sealing jaws 18a, 20a.

The transverse sealing device 14a has a central axis 138a, which in particular intersects a center point of the transverse sealing device 14a. The main extension axis 136a of the circular cylindrical receiving area 124a is arranged in a proximity area of the central axis 138a of the transverse sealing device 14a. The center point of the transverse sealing device 14a is the geometric center of the transverse sealing device 14a. The central axis 138a of the transverse sealing device 14a is equivalent to a main extension axis of the transverse sealing device 14a. The central axis 138a of the transverse sealing device 14a is equivalent to the rotation axis 16a of the transverse sealing device 14a. Alternatively, it is also conceivable that the central axis 138a of the transverse sealing device 14a is different from the rotation axis 16a of the transverse sealing device 14a. The proximity area of the central axis 138a of the transverse sealing device 14a has a maximum extension starting from the central axis 138a of the transverse sealing device 14a, which is in particular oriented perpendicularly to the central axis 138a of the transverse sealing device 14a, whose value is maximally 20 %, particularly preferably maximally 10 %, of a value of a maximum transverse extent of the transverse sealing device 14a.

The guide element 124a of the guide unit 32a of the vertical form fill sealing machine 10a defines a circle-shaped guideway 140a, wherein the transverse sealing device 14a is arranged at least substantially completely within a circular cylinder 142a corresponding to the circle-shaped guideway 140a. The circular cylinder 142a corresponding to the circle-shaped guideway 140a differs, especially in a radius, from the circular cylindrical receiving area 126a. The circle shaped guideway 140a is defined by the guide groove 132a of the guide element 124a. Alternatively it is also conceivable that the circular cylinder 142a corresponding to the circle-shaped guideway 140a is equivalent to the circular cylindrical receiving area 126a. In particular it is conceivable alternatively, that the circular cylindrical shaped receiving area 126a is at least partially delimited by the circle-shaped guideway 140a of the guide element 124a.

The transverse sealing device 14a has at least partially a circle-shaped outside contour, at least viewed in a direction parallel to the rotation axis 16a. The outside contour 16a of the transverse sealing device 14a constitutes a full circle, at least viewed in the direction parallel to the rotation axis 16a. A curvature, preferably at least a curvature radius of the curvature, of the at least partially circle-shaped outside contour is equivalent to the curvature, preferably the radius of the curvature, of the at least one guide element 124a, in particular the inside wall 130a of the guide element 124a, preferably at least viewed in the direction parallel to the rotation axis 16a. The at least partially circle-shaped outside contour is arranged on a side of the transverse sealing device 14a that faces the machine frame 12a, in particular the inner wall 78a of the machine frame 12a. The frame 70a of the transverse sealing device 14a constitutes the at least partially circle-shaped outside contour of the transverse sealing device 14a. Alternatively, it is also conceivable, that at least one of the at least two sealing jaws 18a, 20a or another component of the transverse sealing device 14a constitute/s the at least partially circle-shaped outside contour of the transverse sealing device 14a. It is also conceivable, that the transverse sealing device 14a has a circular cylindrical outside wall.

The guide element 124a, in particular the inside wall 130a of the guide element 124a, encompasses the transverse sealing device 14a in at least one rotational position of the transverse sealing device 14a relative to the guide element 124a by at least 75° along a circumferential direction of the transverse sealing device 14a. The circumferential direction of the transverse sealing device 14a runs in a plane which is perpendicular to the rotation axis 16a of the transverse sealing device 14a. Alternatively, it is conceivable that the guide element 124a, in particular the inside wall 130a of the guide element 124a encompasses the transverse sealing device 14a in at least one further rotational position of the transverse sealing device 14a relative to the guide element 124a, by less than 75° along the circumferential direction of the transverse sealing device 14a. Preferably, the at least one guide element 124a encompasses the transverse sealing device 14a in the at least one rotational position of the transverse sealing device 14a relative to the guide element 124a, by at least 90°. It is also conceivable that the at least one guide element 124a encompasses the transverse sealing device 14a in the at least one rotational position of the transverse sealing device 14a relative to the guide element 124a by at least 180° and particularly preferably by 360° along the circumferential direction of the transverse sealing device 14a.

The main extension axis 136a of the circular cylindrical receiving area 126a is arranged within a proximity area of a central axis 28a of the filling tube 26a, and is in particular equivalent to the central axis 28a of the filling tube 26a. The rotation axis 16a of the transverse sealing device 14a is arranged within the proximity area of the central axis 28a of the filling tube 26a, and is in particular equivalent to the central axis 28a of the filling tube 26a. The central axis 28a of the filling tube 26a is equivalent to a main output axis of the filling tube 26a. It is also conceivable that the central axis 28a of the filling tube 26a is equivalent to a main extension axis of the filling tube. The proximity area of the central axis 28a of the filling tube 26a has a maximum extension starting from the central axis 28a of the filling tube 26a, in particular running perpendicularly to the central axis 28a of the filling tube 26a, whose value is maximally 20 %, particularly preferably maximally 10 %, of a value of the maximum transverse extent of the transverse sealing device 14a. The central axis 28a of the filling tube 26a runs at least substantially parallel to the rotation axis 16a of the transverse sealing device 14a and/or the main extension axis 136a of the circular cylindrical receiving area 126a. The filling station 24a is arranged in such a way that the vertical movement axis 40a of the guide unit 82a of the transverse sealing device 14a, intersects with the filling station 24a. The central axis 28a of the filling tube 24a runs at least substantially parallel to the vertical movement axis 40a of the guide unit 82a of the transverse sealing device 14a, and/or the sealing surfaces 76a of the at least two sealing jaws 18a, 20a.

The vertical form fill sealing machine 10a comprises a drive unit 30a to drive the movement unit so as to generate a rotation of the transverse sealing device 14a as a whole around the rotation axis 16a. Exemplarily, the drive unit 30a of the vertical form fill sealing machine 10a is implemented as an electromotor, as a pneumatic motor or as another drive unit that appears reasonable to a person skilled in the art. The vertical form fill sealing machine 10a comprises a control unit (not shown here) to control a drive of the drive unit 30a of the vertical form fill sealing machine 10a. The control unit comprises at least a processor and a storage element as well as an operation program stored on the storage element. The storage element is preferably implemented as a digital storage element, for example as a hard disk or the like. The control unit controls the drive of the drive unit 30a of the vertical form fill sealing machine 10a automatically, in particular depending on a running operation program of the control unit. Alternatively or additionally, it is conceivable that the vertical form fill sealing device 10a comprises an input unit (not shown here) to manually control the drive unit 30a of the vertical form fill sealing machine 10a for rotating the transverse sealing device 14a as a whole around the rotation axis 16a. Exemplarily, the input unit comprises a keyboard, a touchscreen, buttons, an adjustment wheel or the like. It is conceivable that the input unit is attached to the machine frame 12a or is part of an external unit such as a server, a smartphone, a laptop, a remote control or the like, which in particular has a data connection to the control unit of the vertical form fill sealing machine 10a. Furthermore, it is additionally or alternatively also conceivable that the vertical form fill sealing machine 10a comprises at least one mechanical control element which is intended to be operated manually by a user. Exemplarily, the at least one mechanical control element is implemented as a lever, as a mechanical adjustment wheel or the like. The transverse sealing device 10a is rotatable at least substantially as a whole by means of the drive unit 30a of the vertical form fill sealing machine 10a and/or manually by means of the at least one mechanical control element during operation of the vertical form fill sealing 10a machine, in particular during sealing of the packaging material and/or filling of packages. Additionally or alternatively, it is also conceivable that the transverse sealing device 14a is rotatable as a whole when the vertical form fill sealing machine 10a does not fill packages and/or seal packaging material. Alternatively or additionally, it is also conceivable that the transverse sealing 10a device is rotatable as a whole around the rotation axis 16a of the transverse sealing device 14a by hand free from any addition mechanical control elements or the like.

Figure 3 shows the transverse sealing device 14a in a detailed view. The at least two sealing jaws 18a, 20a are movably, in particular linearly movably, connected to the frame 70a, in particular via the guide unit 82a of the transverse sealing device 14a. The transverse sealing device 14a comprises the guide unit 82a to guide the at least two sealing jaws 18a, 20a during a movement, in particular relative to the frame 70a. The transverse sealing device 14a, in particular the guide unit 82a of the transverse sealing device 14a, comprises two guide elements 64a, 74a to guide the at least two sealing jaws 18a, 20a during a vertical movement of the at least two sealing jaws 18a, 20, in particular relative to the frame 70a and/or the machine frame 12a. Alternatively, it is also conceivable that the transverse sealing device 14a, in particular the guide unit 82a of the transverse sealing device 14a, comprises only one guide element or more than two guide elements. The two guide elements 64a, 74a of the guide unit 82a of the transverse sealing device 14a are embodied as guide rods, which are in particular arranged rotatably relative to the frame 70a. Alternatively it is also conceivable that the two guide elements 64a, 74a of the guide unit 82a of the transverse sealing device 14a are embodied as other guide elements that appear reasonable to a person skilled in the art. The guide unit 82a of the transverse sealing device 14a comprises two further guide elements 84a to guide the at least two sealing jaws 18a, 20a during a horizontal movement of the at least two sealing jaws 18a, 20a relative to each other. The two further guide elements 84a of the guide unit 82a of the transverse sealing device 14a are embodied differently from the two guide elements 64a, 74a of the guide unit 82a. The two further guide elements 84a of the guide unit 82a of the transverse sealing device 14a are implemented as guide rods or the like, which are in particular arranged in a rotationally fixed manner relative to the frame 70a.

The transverse sealing device 14a comprises at least one movement unit 36a to move the at least two sealing jaws 18a, 20a, in particular translationally, relative to each other along a direction parallel to a horizontal movement axis 38a of the guide unit 82a of the transverse sealing device 14a and/or to move the at least two sealing jaws 18a, 20a, in particular translationally, along a direction parallel to a vertical movement axis 40a of the guide unit 82a of the transverse sealing device 14a. The transverse sealing device 14a comprises at least to drive units 42a, 44a to provide a driving force so as to generate a horizontal movement and/or a vertical movement of the at least two sealing jaws 18a, 20a, preferably relative to the frame 70a and/or relative to the machine frame 12a. One drive unit 44a of the at least two drive units 42a, 44a is configured to drive the movement unit 36a so as to generate a horizontal movement of the at least two sealing jaws 18a, 20a relative to each other. At least one further drive unit 42a of the at least two drive units 42a, 44a is configured to drive the movement unit 36a so as to generate a vertical movement of the at least two sealing jaws 18a, 20a. Alternatively, it is also conceivable that the drive unit 44a or the further drive unit 42a is configured to drive the movement unit 36a so as to generate the horizontal movement and the vertical movement of the at least two sealing jaws 18a, 20a. The further drive unit 42a of the at least two drive units 42a, 44a comprises a lifting fork, a transmission belt, a gear wheel, or the like for transmitting a driving force of the at least one further drive unit 42a to the at least two sealing jaws 18a, 20a in order to generate a vertical movement of the at least two sealing jaws 18a, 20a, in particular relative to the frame 70a. Alternatively it is also conceivable that the further drive unit 42a is configured for driving the movement unit 36a to generate the vertical movement of the at least two sealing jaws 18a, 20a, in particular relative to the frame 70a. The horizontal movement axis of the at least two sealing jaws 18a, 20a relative to each other runs along the direction parallel to the horizontal movement axis 38a of the guide unit 82a of the transverse sealing device 14a. The vertical movement of the at least two sealing jaws 18a, 20a runs along the direction parallel to the vertical movement axis 40a of the guide unit 82a of the transverse sealing device 14a. The at least two drive units 42a, 44a of the transverse sealing device 14a are implemented as electromotors. Alternatively, it is also conceivable that the at least two drive units 42a, 44a of the transverse sealing device 14a are implemented as pneumatic motors or as another drive unit that appears reasonable to a person skilled in the art. The drive unit 44a and the further drive unit 42a of the transverse sealing device 14a are arranged in an at least substantially positionally fixed manner relative to the machine frame 12a. In particular, that a drive unit is arranged "in an at least substantially positionally fixed manner" means free from any movement other than a movement of mechanical components of the drive unit which inevitably move during operation of the drive unit.

The horizontal movement axis 38a of the guide unit 82a of the transverse sealing device 14a runs at least substantially perpendicularly to the rotation axis 16a of the transverse sealing device 14a. The term "substantially perpendicularly" is here in particular to mean an orientation of a direction relative to a reference direction, wherein the direction and the reference direction, in particular viewed in a projection plane, include a 90°-angle and the angle has a maximum deviation of in particular less than 8°, advantageously less than 5° and especially advantageously less than 2°. The vertical movement axis 40a of the guide unit 82a of the transverse sealing device 14a runs at least substantially parallel to the rotation axis 16a of the transverse sealing device 14a. The term "substantially parallel" is here in particular to mean an orientation of a direction relative to a reference direction, in particular in a plane, wherein the direction has a deviation from the reference direction that is smaller than 8°, advantageously smaller than 5° and especially advantageously smaller than 2°. The at least two sealing jaws 18a, 20a are configured to seal a packaging material, which is in particular arrangeable between the at least two sealing jaws 18a, 20a. The horizontal movement axis 38a of the guide unit 82a of the transverse sealing device 14a runs at least substantially perpendicularly to the sealing surfaces 76a of the at least two sealing jaws 18a, 20a. The sealing surfaces 76a of the at least two sealing jaws 18a, 20a run at least substantially perpendicularly to the vertical movement axis 38a of the guide unit 82a of the transverse sealing device 14a. The rotation axis 16a of the transverse sealing device 14a runs at least substantially parallel to the sealing surfaces 76a of the at least two sealing jaws 18a, 20a.

The movement unit 36a is arranged at least substantially completely sideways relative to the at least two sealing jaws 18a, 20a, at least viewed in a direction parallel to a horizontal movement axis 38a of the guide unit 82a of the transverse sealing device 14a. By the fact that an object is arranged "at least substantially completely sideways relative to a further object" is here in particular to be understood that at least 50%, preferably 75% and particularly preferably at least 90% of a total volume and/or a total mass of the object are arranged sideways relative to the further object. Preferably, in at least one operation state of the movement unit, the movement unit is arranged completely sideways relative to the at least two sealing jaws, at least viewed in the direction parallel to the horizontal movement axis. The movement unit 36a is embodied differently from the drive unit 44a and/or the further drive unit 42a. The movement unit 36a is embodied differently from a guide unit 82a of the transverse sealing device 14a, in particular at least differently from positionally fixed guide elements of the transverse sealing device 14a. The guide unit 82a of the transverse sealing device 14a is preferably configured to guide a movement of the at least two sealing jaws 18a, 20a. The at least two sealing jaws 18a, 20a are, in particular linearly, movably supported along the direction parallel to the horizontal movement axis 38a of the guide unit 82a of the transverse sealing device 14a. The at least two sealing jaws 18a, 20a are, in particular linearly, movably supported along the direction parallel to a vertical movement axis 40a of the guide unit 82a of the transverse sealing device 14a.

The movement unit 36a is configured to convert a power generatable by the drive unit 44a and/or the further drive unit 42a and acting onto the at least two sealing jaws 18a, 20a into a horizontal movement of the at least two sealing jaws 18a, 20a relative to each other and/or to generate a vertical movement of the at least two sealing jaws 18a, 20a, in particular relative to the frame 70a and/or the machine frame 12a. The vertical movement axis 40a extends at least substantially parallel to the sealing surfaces 76a of the at least two sealing jaws 18a, 20a and/or at least substantially perpendicularly to the horizontal movement axis 38a.

The movement unit 36a is arranged sideways relative to the at least two sealing jaws 18a, 20a in such a way that the movement unit 36a is positioned at least substantially completely within a proximity area of the at least two sealing jaws 18a, 20a. By the fact that the movement unit 36a is arranged sideways relative to the at least two sealing jaws 18a, 20a in such way that the movement unit 36a is positioned at least substantially completely within the proximity area of the at least two sealing jaws 18a, 20a, is here to be understood that the movement unit 36a is arranged sideways relative to the at least two sealing jaws 18a, 20a in such a way that at least 50%, preferably 75% and particularly preferably at least 90% of a total volume and/or a total mass of the movement unit 36a are arranged sideways relative to the at least two sealing jaws 18a, 20a within the proximity area of the at least two sealing jaws 18a, 20a. In particular, the proximity area of the at least two sealing jaws 18a, 20a extends by up to 20 %, preferably by up to 10 % and particularly preferably by up to 5 % of a maximum movement range of the at least two sealing jaws 18a, 20a in the direction parallel to the horizontal movement axis 38a beyond the at least two sealing jaws 18a, 20a. Preferably, the proximity area of the at least two sealing jaws 18a, 20a extends by up 20 %, preferably by up to 10 % and particularly preferably by up to 5 % of a maximum movement range of the at least two sealing jaws 18a, 20a along the direction parallel to the vertical movement axis 38a beyond the at least two sealing jaws 18a, 20a. Particularly preferably, the proximity area of the at least two sealing jaws 18a, 20a extends by up to 20 %, preferably up to 10 % and particularly preferably up to 5 % of a maximum extension of the at least two sealing jaws 18a, 20a perpendicularly to the vertical movement axis 40a and the horizontal movement axis 38a, beyond the at least two sealing jaws 18a, 20a.

The at least two sealing jaws 18a, 20a are pullable into a sealing position by means of the movement unit 36a. The at least two sealing jaws 18a, 20a are movable relative to each other into the sealing position free from a direct pushing movement on the at least two sealing jaws 18a, 20a by means of the movement unit 36a. The at least two sealing jaws 18a, 20a are pullable, relative to each other, into the sealing position along the direction parallel to the horizontal movement axis 38a by means of the movement unit 36a. The movement unit 36a is connected to the at least two sealing jaws 18a, 20a in such a way that the movement unit 36a is configured to generate a direct pulling force to pull the at least two sealing jaws 18a, 20a relative to each other into the sealing position. The movement unit 36a is connected to the at least two sealing jaws 18a, 20a in such a way that the at least two sealing jaws 18a, 20a are moved, in particular pulled, relative to each other in a synchronous movement. Alternatively it is also conceivable that the movement unit 36a is connected to the at least two sealing jaws 18a, 20a in such a way that the at least two sealing jaws 18a, 20a are moved, in particular pulled, relative to each other in an asynchronous movement.

The movement unit 36a comprises four movement elements 46a, 48a, 54a, 56a, in particular mechanical connection elements. Exemplarily, the four movement elements 46a, 48a, 54a, 56a are implemented as arms. Alternatively it is also conceivable that the four movement elements 46a, 48a, 54a, 56a are implemented as beams, as bearing elements, as gear wheels or the like. Alternatively, it is also conceivable that the movement unit 36a comprises merely one movement element or more than four movement elements. The four movement elements 46a, 48a, 54a, 56a are implemented identically to each other. Alternatively, it is also conceivable that the four movement elements 46a, 48a, 54a, 56a are embodied differently from each other. Two movement elements 46a, 48a, 54a, 56a of the four movement elements 46a, 48a, 54a, 56a are each movably, in particular rotatably, connected to one of the at least two sealing jaws 18a, 20a.

As an example, one movement element 46a of the four movement elements 46a, 48a, 54a, 56a is described here. The movement element 46a is directly, preferably movably, in particular rotatably, connected to one sealing jaw 18a of the at least two sealing jaws 18a, 20a. At least one further movement element 48a of the four movement elements 46a, 48a, 54a, 56a is directly, preferably movably, in particular rotatably, connected to a further sealing jaw 20a of the at least two sealing jaws 18a, 20a. The movement element 46a and the further movement element 48a are movable relative to each other, wherein preferably a movement of the at least two sealing jaws 18a, 20a relative to each other is generatable by a relative movement of the movement element 46a and the further movement element 48a. By a relative movement of the movement element 46a and the further movement element 48a the at least two sealing jaws 18a, 20a are pushable or pullable. The movement element 46a and the further movement element 48a are movable relative to each other to pull the at least two sealing jaws 18a, 20a towards each other into the sealing position. The movement of the movement element 46a and the further movement element 48a relative to each other, for moving the at least two sealing jaws 18a, 20a relative to each other, in particular into the sealing position, is generatable by a rotating movement of the movement unit 36a, in particular by a rotation of at least one additional movement element 86a of the movement unit 36a. Alternatively, it is also conceivable that the movement element 46a and the further movement element 48a are movable relative to each other to move the at least two sealing jaws 18a, 20a relative to each other by a pushing and/or pulling movement of the movement unit 36a, in particular by a pushing and/or pulling movement of the additional movement element 86a of the movement unit 36a.

The movement unit 36a comprises two torque resistant linear bushings 62a, 68a. The additional movement element 86a is constituted by one torque resistant linear bushing 62a of the at least two torque resistant linear bushings 62a, 68a. Alternatively, it is also conceivable that the movement unit 36a comprises merely one torque resistant linear bushing 62a or more than two torque resistant linear bushings. The at least two torque resistant linear bushings 62a, 68a are configured to transmit a drive torque, in particular from the at least one drive unit 44a, for moving the at least two sealing jaws 18a, 20a relative to each other along the direction parallel to the horizontal axis 38a. On each side of the at least two sealing jaws 18a, 20a, one of the two torque resistant linear bushings 62a, 68a is arranged, at least viewed in the direction parallel to the horizontal movement axis 38a guide unit 82a of the transverse sealing device 14a. The at least two torque resistant linear bushings 62a, 68a are arranged on averted sides of the at least two sealing jaws 18a, 20a, in particular sideways, at least viewed in a direction perpendicular to the horizontal movement axis 38a and the vertical movement axis 40a of guide unit 82a of the transverse sealing device 14a.

The movement element 46a and the further movement element 48a are movably, in particular rotatably, connected to one torque resistant linear bushing 62a of the two torque resistant linear bushings 62a, 68a. The torque resistant linear bushing 62a, the movement element 46a and the further movement element 48a are components of a crank slider mechanism 100a. The crank slider mechanism 100a is configured to transmit a driving force generatable by the drive unit 44a into a horizontal movement of the at least two sealing jaws 18a, 20a.The torque resistant linear bushing 62a is configured to transmit a driving force, in particular from the drive unit 44a, to the movement element 46a and the further movement element 48a for moving the at least two sealing jaws 18a, 20a relative to each other along the direction parallel to the horizontal movement axis 38a. A connection of two further movement elements 54a, 56a of the four movement elements 46a, 48a, 54a, 56a, one further additional movement element 88a of the movement unit 36a, in particular one further torque resistant linear bushing 68a of the two torque resistant linear bushings 62a, 68a, and the drive unit 44a is analogous to a connection of the movement element 46a, the further movement element 48a, the additional movement element 86a, in particular the torque resistant linear bushing 62a of the two torque resistant linear bushing 62a, 68a, and the drive unit 44a.

It is conceivable that the movement unit 36a, in particular at least one of the four movement elements 46a, 48a, 54a, 56a of the movement unit 36a, and the at least two sealing jaws 18a, 20a, in particular the movement area 60a of the at least two sealing jaws 18a, 20a, overlap with each other at least partially in at least one operation state of the at least two sealing jaws 18a, 20a, at least viewed in a direction perpendicular to the horizontal movement axis 38a of the guide unit 82a of the transverse sealing device 14a. An area behind and on front of the at least two sealing jaws 18a, 20a is at least substantially completely free from the movement unit 36a, at least viewed in the direction parallel to the horizontal movement axis 38a of the guide unit 82a of the transverse sealing device 14a.

The two torque resistant linear bushings 62a, 68a are each movably, in particular linearly movably, connected to one of the two guide elements 64a, 74a of the guide unit 82a of the transverse sealing device 14a. The at least one drive unit 44a is configured to drive the at least two guide elements 64a, 74a of the guide unit 82a of the transverse sealing device 14a to rotate around rotation axes 66a of the at least two guide elements 64a, 74a of the guide unit 82a of the transverse sealing device 14a in order to generate a horizontal movement of the two sealing jaws 18a, 20a relative to each other. The movement unit 36a is constituted by the two torque resistant linear bushings 62a, 68a, the two guide elements 64a, 74a of the guide unit 82a of the transverse sealing device 14a and the four movement elements 46a, 48a, 54a, 56a. Alternatively it is also conceivable that the movement unit 36a is constituted differently, in particular in a manner that appears reasonable to a person skilled in the art. The two torque resistant linear bushings 62a, 68a are each connected to one of the two guide elements 64a, 74a of the guide unit 82a of the transverse sealing device 14a in a rotationally fixed manner. The at least two guide elements 64a, 74a of the guide unit 82a of the transverse sealing device 14a are arranged at least substantially completely sideways relative to the at least two sealing jaws 18a, 20a, at least viewed in a direction parallel to the horizontal movement axis 38a of the guide unit 82a of the transverse sealing device 14a. Main extension axes of the at least two guide elements 64a, 74a of the guide unit 82a of the transverse sealing device 14a are at least substantially perpendicular to the horizontal movement axis 38a of the guide unit 82a of the transverse sealing device 14a. The main extension axes of the at least two guide elements 64a, 74a of the guide unit 82a of the transverse sealing device 14a are at least substantially parallel to the vertical movement axis 40a of the guide unit 82a of the transverse sealing device 14a. The main extension axes of the two guide elements 64a, 74a of the guide unit 82a of the transverse sealing device 14a correspond to their rotation axes 66a. A drive force of the drive unit 44a is transmittable to the two guide elements 64a, 74a of the guide unit 82a of the transverse sealing device 14a by means of a transmission belt, a gear wheel, or the like of the drive unit. The two guide elements 64a, 74a of the guide unit 82a of the transverse sealing device 14a constitute two further additional movement elements 90a of the movement unit 36a. The guide elements 64a, 74a of the guide unit 82a of the transverse sealing device 14a are rotatably connected to the frame 70a of the transverse sealing device 70a.

The two torque resistant linear bushings 62a, 68a can each be moved along the two guide elements 64a, 74a of the guide unit 82a of the transverse sealing device 14a for a vertical movement of the at least two sealing jaws 18a, 20a. The vertical movement of the at least two sealing jaws 18a, 20a is directly linked with a vertical movement of the two torque resistant linear bushings 62a, 68a. The at least one further drive unit 42a is configured to drive the movement unit 36c to generate the vertical movement of the at least two sealing jaws 18a, 20a relative to the frame 70a.

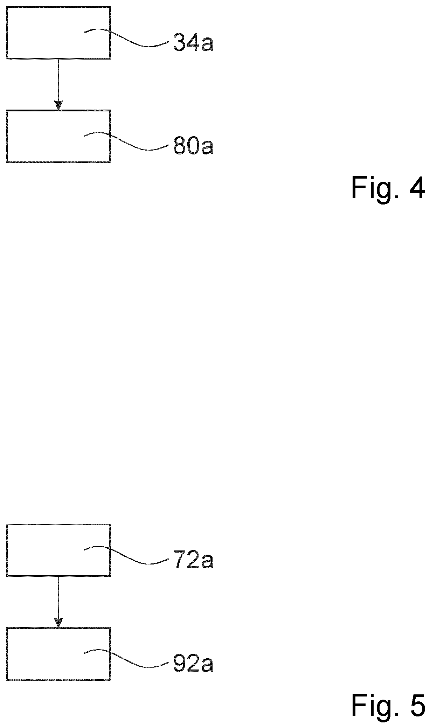

Figure 4 shows schematically a flow chart of a method for operating the vertical form fill sealing machine 10a. In a process step 34a the transverse sealing device 14a of the vertical form fill sealing machine 10a is rotated as a whole around the rotation axis 16a of the transverse sealing device 14a relative to the machine frame 12a of the vertical form fill sealing machine 10a. It is conceivable that in the process step 34a the transverse sealing device 14a is rotated as a whole during a sealing of the packaging material and/or a filling of packages, preferably by means of the drive unit 30a of the vertical form fill sealing machine 10a and/or manually by the at least one mechanical control element. It is also conceivable that in the process step 34a the transverse sealing device 14a is rotated as a whole while the vertical form fill sealing machine 10a is not filling packages and/or sealing packaging material, preferably by means of the drive unit 30a of the vertical form fill sealing machine 10a and/or manually by the at least one mechanical control element. Preferably, in the process step 34a the transverse sealing device 14a is rotated as a whole through an angle of 90° around the rotation axis 16a of the transverse sealing device 14a relative to the machine frame 12a. Alternatively, it is also conceivable that in the process step 34a the transverse sealing device 14a is rotated as a whole around the rotation axis 16a of the transverse sealing device 14a through an angle other than 90° relative to the machine frame 12a.

In the process step 34a the transverse sealing device 14a is steplessly rotated as a whole around the rotation axis 16a from the one work position of the transverse sealing device 14a for a transverse sealing of a packaging material to the further work position of the transverse sealing device 14a for a transverse sealing of a packaging material. In the process step 34a the transverse sealing device 14a is rotated as a whole around the rotation axis 16a of the transverse sealing device 14a that is fixed in position relative to the machine frame 12a of the vertical form fill sealing machine 10a from the one work position of the transverse sealing device 14a for a transverse sealing of a packaging material to the further work position of the transverse sealing device 14a for a transverse sealing of a packaging material. Particularly preferably, in the process step 34a the transverse sealing device 14a is rotated as a whole around the rotation axis 16a of the transverse sealing device 14a, in particular by means of the drive unit 30a of the vertical form fill sealing machine 10a and/or manually by means of the at least one mechanical control element, from the work position to the further work position free from any translational movement of the transverse sealing device 14a relative to the machine frame 12a.

In a further process step 80a the at least two sealing jaws 18a, 20a are moved into the sealing position for a transverse sealing of the packaging material. It is also conceivable that the at least two sealing jaws 18a, 20a are moved into the sealing position for a transverse sealing of the packaging material in the process step 34, in particular during the rotation of the transverse sealing device 14a around the rotation axis 16a of the transverse sealing device 14a relative to the machine frame 12a.

Figure 5 shows schematically a flow chart of a method for operating the transverse sealing device 14a for sealing a package or a packaging material. In a process step 72a the at least two sealing jaws 18a, 20a of the transverse sealing device 14a are pulled into a sealing position by means of the movement unit 36a of the transverse sealing device 14a. In the process step 72a at least the movement element 46a and the at least one further movement element 48a of the two movement elements 46a, 48a of the movement unit 36a are moved by the drive unit 44a relative to each other in order to generate a pulling force for pulling the at least two sealing jaws 18a, 20a towards each other into the sealing position. In the process step 72a a driving force for moving the at least two sealing jaws 18a, 20a relative to each other along the direction parallel to the horizontal movement axis 38a is transmitted by the two torque resistant linear bushings 62a, 68a of the movement unit 36a. In the process step 72a the drive unit 44a drives the guide elements 64a, 74a of the guide unit 82a of the transverse sealing device 14a to rotate around their rotation axes 66a in order to generate a rotation of the two torque resistant linear bushings 62a, 68a. In the process step 72a the rotational force of the torque resistant linear bushing 62a of the two torque resistant linear bushings 62, 68a is converted into a relative movement of the movement element 46a and the further movement element 48a in order to generate a pulling or pushing force for moving the at least two sealing jaws 18a, 20a relative to each other along the direction parallel to the horizontal movement axis 38a of the guide unit 82a of the transverse sealing device 14a. This applies analogously to the further torque resistant linear bushing 68a of the two torque resistant linear bushings 62a, 68a and the two further movement elements 54a, 56a. In a further process step 80a the at least two sealing jaws 18a, 20a are moved vertically relative to the frame 70a by means of the further drive unit 42a.

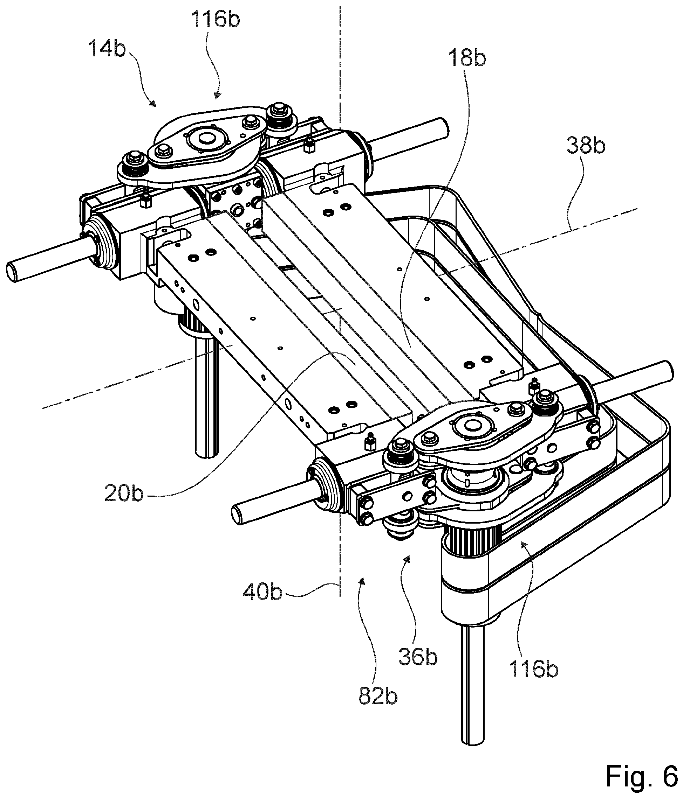

In figures 6 to 13 further exemplary embodiments of the invention are illustrated. The following description and the drawings are essentially limited to the differences between the exemplary embodiments, wherein as regards identically denominated components, in particular components having the same reference numerals, the drawings and/or the description of the other exemplary embodiment, in particular of figures 1 to 5, may principally be referred to. In order to distinguish between the exemplary embodiments, the letter a has been added to the reference numerals of the exemplary embodiment of figures 1 to 5. In the exemplary embodiments of figures 6 to 13 the letter a has been substituted by the letters b to g. In particular, it is also conceivable that a transverse sealing device is embodied differently from the exemplary embodiments shown here.

In figure 6 a transverse sealing device 14b is shown for a sealing of a package or a packaging material. The transverse sealing device 14b comprises at least two sealing jaws 18b, 20b. The transverse sealing device 14b comprises at least one movement unit 36b for moving the at least two sealing jaws 18b, 20b translationally relative to each other along a direction parallel to a horizontal movement axis 38b of a guide unit 82b of the transverse sealing device 14b and for moving the at least two sealing jaws 18b, 20b translationally along a direction parallel to a vertical movement axis 40b of the guide unit 82b of the transverse sealing device 14b, in particular relative to a frame (not shown here) of the transverse sealing device 14b. The movement unit 36b comprises two ball-screw slide mechanisms 116b, which are in particular arranged on averted sides of the at least two sealing jaws 18b, 20b. By means of the two ball-screw slide mechanisms 116b, a driving force of at least one drive unit (not shown here) of the transverse sealing device 14b can be converted into a horizontal movement and a vertical movement of the at least two sealing jaws 18b, 20b, in particular relative to the frame. The movement unit 36b is arranged at least substantantially completely sideways relative to the at least two sealing jaws 18b, 20b, at least viewed in a direction parallel to the horizontal movement axis 38b of the guide unit 82b of the transverse sealing device 14b. The movement unit 36b is arranged sideways relative to the at least two sealing jaws 18b, 20b in such a way that the movement unit 36b is positioned at least substantially completely within a proximity area of the at least two sealing jaws 18b, 20b, at least viewed in the direction parallel to the horizontal movement axis 38b of the guide unit 82b of the transverse sealing device 14b. The at least two sealing jaws 18b, 20b are pullable into a sealing position by means of the movement unit 36b.

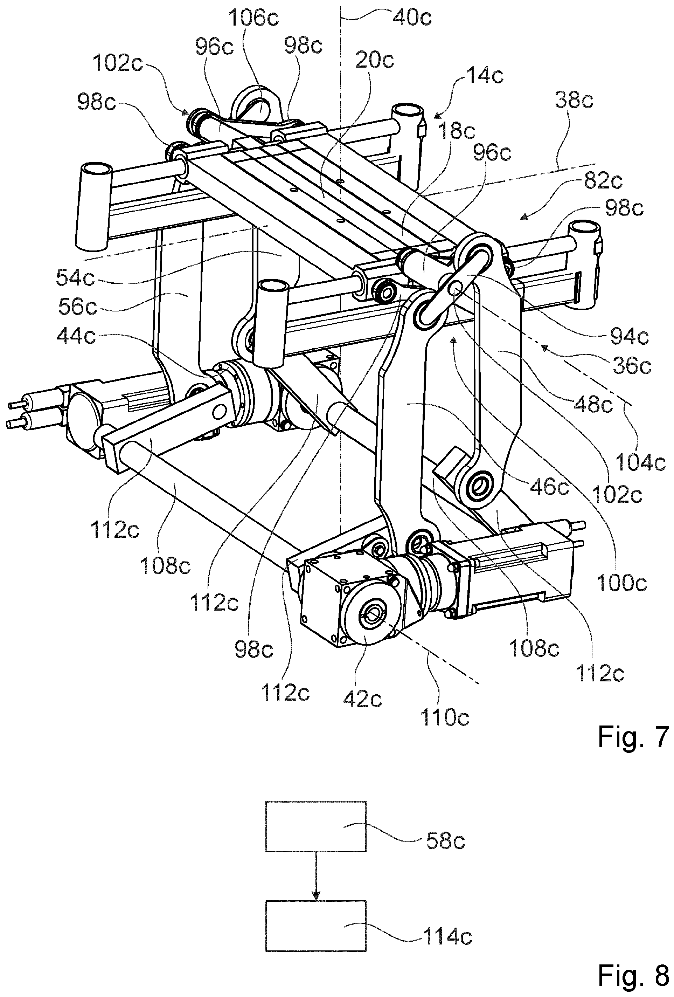

In figure 7 a transverse sealing device 14c is shown for a sealing of a package or a packaging material. The transverse sealing device 14c comprises at least two sealing jaws 18c, 20c. The transverse sealing device 14c comprises at least one movement unit 36c for moving the at least two sealing jaws 18c, 20c translationally relative to each other along a direction parallel to a horizontal movement axis 38c of a guide unit 82c of the transverse sealing device 14c and for moving the at least two sealing jaws 18c, 20c translationally along a direction parallel to a vertical movement axis 40c of the guide unit 82c of the transverse sealing device 14c, in particular relative to a frame (not shown here) of the transverse sealing device 14c. The transverse sealing device 14c comprises at least two drive units 42c, 44c for driving the movement unit 36c.

The at least two drive units 42c, 44c are connected to each other by the movement unit 36c in such a way that a horizontal movement and/or a vertical movement of the that least two sealing jaws 18c, 20c is generatable by a joint drive of the movement unit 36c by means of the at least two drive units 42c, 44c. A horizontal and/or a vertical movement of the at least two sealing jaws 18c, 20c is only generatable by a drive executed by all of the at least two drive units 42c, 44c. If at least one of the at least two drive units 42c, 44c is in a resting state, the movement unit 36c is blocked from any movement, in particular other than vibrational movements causable by a drive of the movement unit 36c by only one of the at least two drive units 42c, 44c, for generating a horizontal movement and/or a vertical movement of the at least two sealing jaws 18c, 20c. If the movement unit 36c is free from a drive executed by at least one of the at least two drive units 42c, 44c, a movement of the movement unit 36c for generating a horizontal movement and/or a vertical movement of the at least two sealing jaws 18c, 20c is blocked.

The movement unit 36c is drivable by the joint drive by means of the at least two drive units 42c, 44c in such a way that merely a horizontal movement of the at least two sealing jaws 18c, 20c is generated, in particular relative to a frame (not shown here) of the transverse sealing device 14c. The movement unit 36c is drivable by the joint drive by means of the at least two drive units 18c, 20c in such a way that merely a vertical movement of the at least two sealing jaws 18c, 20c is generated, in particular relative to the frame of the transverse sealing device 14c. It is also conceivable that the movement unit 36c is drivable by the joint drive by means of the at least two drive units 42c, 44c in such a way that simultaneously a horizontal movement and a vertical movement of the at least two sealing jaws 18c, 20c is generated, in particular relative to the frame of the transverse sealing device 14c.

The movement unit 36c comprises two movement elements 46c, 48c in order to create a movable connection between the two drive units 42c, 44c and the at least two sealing jaws 18c, 20c. The two movement elements 46c, 48c are implemented as arms. Alternatively, it is also conceivable that the two movement elements 46c, 48c are implemented as beams, as bearing elements, in particular as torque resistant linear bushings, as gear wheels or the like. The movement unit 36c comprises at least one drive connection element 94c to connect the at least two drive units 42c, 44c mechanically to each other. The drive connection element 94c is implemented as a beam. Alternatively, it is also conceivable that the drive connection element 94c is implemented as an arm, a bearing element, in particular a torque resistant linear bushing, a gear wheel or the like. The drive connection element 94c is connected to the at least two drive units 42c, 44c by the two movement elements 46c, 48c of the movement unit 36c. Alternatively, it is also conceivable that at least one drive unit 42c, 44c of the at least two drive units 42c, 44c is directly connected, in particular movably connected, to the drive connection element 94c, preferably free from any additional movement elements. The drive connection element 94c is connected to the at least two sealing jaws 18c, 20c via at least one additional movement element 96c of the movement unit 36c, which is preferably connected to the drive connection element 94c in a rotationally fixed manner. The movement unit 36c comprises at least two slider elements 98c, which are in particular movably, in particular rotatably, connected to the additional movement element 94c and/or the at least two sealing jaws 18c, 20c.

The drive connection element 94c, the two slider elements 98c and the additional movement element 96c are components of a crank slider mechanism 100c, which is in particular arranged between the at least two movement elements 46c, 48c and the at least two sealing jaws 18c, 20c. The two slider elements 98c are implemented as arms. Alternatively, the two slider elements are implemented as beams, bearing elements, gear wheels, or the like. The drive connection element 94c is preferably connected to the additional movement element 96c via a rod 102c or the like. Alternatively it is also conceivable that the additional movement element 96c and the drive connection element 94c are implemented integrally with each other. The crank slider mechanism 100c is preferably configured to convert a driving force generatable by the at least two drive units 18c, 20c, in particular a movement of the drive connection element 94c, into a horizontal and/or vertical movement of the at least two sealing jaws 18c, 20c. The drive connection element 94c is merely movable by the joint drive of the at least two drive units18c, 20c. In particular, in a preferred implementation of the invention, the drive connection element can be driven to rotate around a rotation axis 104c of the drive connection element 94c by the joint drive by means of the at least two drive units 18c, 20c such as to generate a horizontal movement of the at least two sealing jaws 18c, 20cThe rotation axis 104c of the drive connection element 94c runs at least substantially parallel to the sealing surfaces 76a of at least two sealing jaws 18c, 20c. The rotation axis 104c of the drive connection element 94c runs at least substantially perpendicularly to the horizontal movement axis 38c of the guide unit 82c of the transverse sealing device 14c and to the vertical movement axis 40c of the guide unit 82c of the transverse sealing device 14c.

The movement unit 36c has an analogous structure on both sides of the at least two sealing jaws 18c, 20c. The movement unit 36c comprises a further drive connection element 106c, which is in particular implemented identically to the drive connection element 94c. Alternatively it is also conceivable that the further drive connection element 106c is embodied differently from the drive connection element 94c. The drive connection element 94c and the further drive connection element 106c are arranged on averted sides of the at least two sealing jaws 18c, 20c. A connection of the further drive connection element 106c to the at least two sealing jaws 18c, 20c is preferably analogous to a connection of the drive connection element 94c to the at least two sealing jaws 18c, 20c. A connection of the further drive connection element 106c to the at least two drive units 42c, 44c is analogous to a connection of the drive connection element 94c to the at least two drive units 42c, 44c. The movement unit 36c comprises at least two further movement elements 54c, 56c, whose connection with the at least two sealing jaws 18c, 20c is analogous to a connection of the at least two movement elements 46c, 48c with the at least two sealing jaws 18c, 20c. A connection of the at least two further movement elements 54c, 56c with the further drive connection element 106c is analogous to a connection of the at least two movement elements 46c, 48c with the drive connection element 94c. A connection of the at least two further movement elements 54c, 56c with the at least two drive units 42c, 44c is analogous to a connection of the at least two movement elements 46c, 48c with the at least two drive units 42c, 44c. The at least two movement elements 46c, 48c and the at least two further movement elements 54c, 56c are arranged on averted sides of the at least two sealing jaws 18c, 20c. The at least two drive units 42c, 44c are arranged at least partially sideways to the at least two sealing jaws 18c, 20c, at least viewed in a direction parallel to the horizontal movement axis 38c. Alternatively, it is also conceivable that the two drive units 42c, 44c are arranged in a central position relative to the at least two movement elements 46c, 48c and the at least two further movement elements 54c, 56c, preferably at least viewed in the direction parallel to the horizontal movement axis 38c of the guide unit 82c of the transverse sealing device 14c. Furthermore, it is alternatively also conceivable that the at least two drive units 42c, 44c are arranged differently, in particular in a way that appears reasonable to a person skilled in the art. The movement unit 36c is implemented of four movement elements 46c, 48c, 54c, 56c, in particular the two movement elements 46c, 48c and the two further movement elements 54c, 56c, two drive connection elements 94c, 106c, in particular the drive connection element 94c and the further drive connection element 106c, four slider elements 98c, two of the four slider elements 98c being embodied by the already aforementioned at least two slider elements 98c, two rods 102c, one of the two rods 102c being in particular embodied by the already aforementioned rod 102c, and two additional movement elements 96c, one of the two additional movement elements 96c being embodied by the already aforementioned additional movement element 96c. Alternatively it is also conceivable that the movement unit 36c is implemented of merely one drive connection element, one rod, two movement elements, two slider elements and one additional movement element. Furthermore, other embodiments of the movement unit 36c are conceivable which seem to be reasonable for a person skilled in the art. In particular, it is conceivable that the movement unit 36c is embodied without any rods 102c.

Each of the at least two drive units 42c, 44c comprises at least one drive shaft 108c. A drive direction of a drive unit 42c, 44c of the at least two drive units 42c, 44c corresponds to a direction of rotation of a rotation of the drive shaft 108c around the rotation axis 110c of the drive shaft 108c. The rotation axes 110c of the drive shafts 108c correspond to main extension axes of the respective drive shafts 108c. The rotation axes 110c of the drive shafts 108c of the at least two drive units 42c, 44c preferably run at least substantially parallel to sealing surfaces of the at least two sealing jaws 18c, 20c. The rotations axes 110c of the drive shafts 108c of the at least two drive units 42c, 44c run at least substantially perpendicularly to the horizontal movement axis 38c and the vertical movement axis 40c of the guide unit 82c of the transverse sealing device 14c. The rotation axes 110c of the drive shafts 108c of the at least two drive units 42c, 44c run at least substantially parallel to each other. Alternatively it is also conceivable that the rotation axes 110c of the drive shafts 108c of the at least two drive units 42c, 44c run transversely, preferably at least substantially perpendicularly, relative to each other. The drive shaft 108c of one drive unit 42c of the at least two drive units 42c, 44c is directly connected to one movement element 46c of the two movement elements 46c, 48c and to one movement element 56c of the at least two further movement elements 54c, 56c. A drive shaft 108c of a further drive unit 44c of the at least two drive units 42c, 44c is directly connected to a further movement element 48c of the at least two movement elements 46c, 48c and to a further movement element 54c of the at least two further movement elements 54c 56c.

The drive connection element 94c and the further drive connection element 106c can be driven to move translationally along a direction parallel to a translational movement axis of the drive connection element 94c and the further drive connection element 106c by the joint drive by means of the at least two drive units 42c, 44c in order to generate a vertical movement of the at least two sealing jaws 42c, 44c, in particular relative to the frame of the transverse sealing device 14c. The translational movement axis of the drive connection element 94c and the further drive connection element 106c runs transversely, particularly preferably at least substantially perpendicularly, to the rotation axis 104c of the drive connection element 94c. The translational movement axis runs preferably at least substantially parallel to the vertical movement axis 40c of the guide unit 82c of the transverse sealing device 14c and/or the sealing surfaces of the at least two sealing jaws 18c, 20c. The translational movement axis runs at least substantially perpendicularly to the horizontal movement axis 40c of the guide unit 82c of the transverse sealing device 14c.

A vertical movement of the at least two sealing jaws 18c, 20c is generatable by a parallel drive of the movement unit 36c by means of the at least two drive units 42c, 44c. A vertical movement of the at least two sealing jaws 18c, 20c is generatable by a parallel drive of the drive connection element 94c and the further drive connection element 106c by means of the at least two drive units 42c, 44c. A parallel drive of the drive connection element 94c and the further drive connection element 106c by the at least two drive units 42c, 44c shall be understood to mean that the movements transmitted to the drive connection element 94c and the further drive connection element 106c, which are generatable by the at least two drive units 42c, 44c, coincide at least in their direction and in their velocity. The components of the crank slider mechanism 100c are, via a parallel drive of the movement unit 36c by means of the at least two drive units 42c, 44c, moved as a whole merely translationally in order to generate a vertical movement of the at least two sealing jaws 18c, 20c. Drive directions of the at least two drive units 42c, 44c for generating a parallel drive of the movement unit 36c, in particular the drive connection element 94c and the further drive connection element 106c, are oriented opposite to each other. Alternatively it is also conceivable that the drive directions of the at least two drive units 42c, 44c coincide in order to generate a parallel drive of the movement unit 36c, in particular the drive connection element 94c and the further drive connection element 106c. It is conceivable that absolute values of drive speeds of the at least two drive units 42c, 44c coincide with or differ from each other for generating a parallel drive of the movement unit 36c, in particular the drive connection element 94c and the further drive connection element 106c, preferably depending on the arrangement of the at least two drive units 42c, 44c relative to each other and/or the arrangement of the movement unit 36c. The drive directions of the at least two drive units 42c, 44c depend on the arrangement of the at least two drive units 42c, 44c relative to each other and/or the arrangement of the movement unit 36c. Alternatively, it is also possible that the two drive units 42c, 44c are arranged and/or implemented in such a way that a parallel drive of the movement unit 36c is generatable by a synchronous operation of the at least two drive units 42c, 44c. The movement unit 36c is arranged in such a way that a parallel drive of the movement unit 36c, in particular the drive connection element 94c and the further drive connection element 106c, generates a translational movement of the drive connection element 94c and the further drive connection element 106c along the direction parallel to the translational movement axis of the drive connection element 94c and the further drive connection element 106c for the purpose of generating a vertical movement of the at least two sealing jaws 18c, 20c, in particular relative to the frame of the transverse sealing device 14c.

A horizontal movement of the at least two sealing jaws 18c, 20c relative to each other is generatable by a non-parallel drive of the movement unit 36c by means of the at least two drive units 42c, 44c. A non-parallel drive of the drive connection element 94c and the further drive connection element 106c by the at least two drive units 42c, 44c is to mean that the movements transmitted to the drive connection element 94c and the further drive connection element 106c, which are generatable by the at least two drive units 42c, 44c, differ at least in their directions. The directions of the movements, which are in particular generatable by means of the at least two drive units 42c, 44c, and are transmitted to the drive connection element 94c and the further drive connection element 106c in the case of a non-parallel drive of the drive connection element 94c and the further drive connection element 106c, are oriented opposite to one another. The movements transmitted to the drive connection element 94c and the further drive connection element 106c by a non-parallel drive of the movement unit 36c, in particular the drive connection element 94c and the further drive connection element 106c, by means of the at least two drive units 42c, 44c coincide at least in a direction and in a velocity. The crank slider mechanism 100c is connected to the at least two drive units 42c, 44c in such a way that by a non-parallel drive of the movement unit 36c by means of the at least two drive units 42c, 44c, the crank slider mechanism 100c is configured to generate a horizontal movement of the at least two sealing jaws 18c, 20c. A horizontal movement of the at least two sealing jaws 18c, 20c, in particular relative to the frame of the transverse sealing device 14c, is generatable by a non-parallel drive of the drive connection element 94c and the further drive connection element 106c by means of the at least two drive units 42c, 44c. It is conceivable that a non-parallel drive of the movement unit 36c, in particular the drive connection element 94c and the further drive connection element 106c, is generatable by an asynchronous operation of the at least two drive units 42c, 44c. The drive directions of the at least two drive units 42c, 44c in this exemplary embodiment coincide for generating a non-parallel drive of the movement unit 36c, preferably the drive connection element 94c and the further drive connection element 106c. The movement unit 36c is arranged in such a way that a non-parallel drive of the movement unit 36c, in particular the drive connection element 94c and the further drive connection element 106c, generates a rotational movement of the drive connection element 94c and the further drive connection element 106c around the rotation axes 104c of the drive connection element 94c and the further drive connection element 106c, in particular in order to generate a horizontal movement of the at least two sealing jaws 18c, 20c. It is conceivable that the absolute values of the drive speeds of the at least two drive units 42c, 44c coincide with or differ from each other in order to generate a parallel drive of the movement unit 36c, in particular the drive connection element 94c and the further drive connection element 106c, preferably depending on the arrangement of the at least two drive units 42c, 44c relative to each other and/or the arrangement of the movement unit 36c. Alternatively it is also conceivable that the drive directions of the at least two drive units 42c, 44c differ from each other, preferably are oriented opposite to each other, for the purpose of generating a non-parallel drive of the movement unit 36c, in particular the drive connection element 94c and the further drive connection element 106c.

The two movement elements 46c, 48c are movably, in particular rotatably, connected to each other. One drive unit 42c of the at least two drive units 42c, 44c is mechanically connected to one movement element 46c of the at least two movement elements 46c, 48c for driving the movement element 46c. A further drive unit 44c of the at least two drive units 42c, 44c is mechanically connected to a further movement element 48c of the at least two movement elements 46c, 48c for driving the further movement element 48c. The two movement elements 46c, 48c and the further two movement elements 54c, 56c are each movably, in particular rotatably, connected to one of the drive shafts 108c of the at least two drive units 42c, 44c, in particular via link arms 112c of the at least two drive units 42c, 44c, which are preferably arranged on the drive shafts 108c of the two drive units 42c, 44c in a fixed position relative to the respective drive shaft 108c.

The movement unit 36c is arranged at least substantially completely sideways relative to the at least two sealing jaws 18c, 20c, at least viewed in a direction parallel to the horizontal movement axis 38c of the guide unit 82c of the transverse sealing device 14c. The movement unit 36c is arranged sideways relative to the at least two sealing jaws 18c, 20c in such a way that the movement unit 36c is positioned at least substantially completely within a proximity area of the at least two sealing jaws 18c, 20c, at least viewed in the direction parallel to the horizontal movement axis 38c of the guide unit 82c of the transverse sealing device 14c. The at least two sealing jaws 18c, 20c are pullable into a sealing position by means of the movement unit 36c.

Figure 8 shows schematically a flow chart of a method for operating the transverse sealing device. In a process step 58c the at least two sealing jaws 18c, 20c of the transverse sealing device 14c are moved translationally along the direction parallel to the horizontal movement axis 18c and/or the vertical movement axis 40c of the guide unit 82c of the transverse sealing device 14c by the joint drive of the movement unit 36c of the transverse sealing device 14c by means of the at least two drive units 42c, 44c of the transverse sealing device 14c. The horizontal movement and/or the vertical movement of the at least two sealing jaws 18c, 20c are/is generated by a drive executed by all of the at least two drive units 42c, 44c.

In the process step 58c a power generated by the at least two drive units 42c, 44c is transmitted by means of the movement unit 36c to the at least two sealing jaws 18c, 20c in order to generate a horizontal movement of the at least two sealing jaws 18c, 20c relative to each other and/or to generate a vertical movement of the at least two sealing jaws 18c, 20c, in particular relative to the frame of the transverse sealing device 14c. It is conceivable that in the process step 58c the movement unit 36c is driven by the joint drive by means of the at least two drive units 42c, 44c in such a way that only a horizontal movement or a vertical movement of the at least two sealing jaws 18c, 20c is generated. In the process step 58c the drive connection element 94c and the further drive connection element 106c are driven to rotate around the rotation axes 104c of the drive connection element 94c and the further drive connection element 106c by the joint drive by means of the at least two drive units 42c, 44c for the purpose of generating a horizontal movement of the at least two sealing jaws 18c, 20c. Alternatively, it is also conceivable that in the process step 58c the drive connection element 94c and the further drive connection element 106c are driven to rotate around the rotation axes 104c of the drive connection element 94c and the further drive connection element 106c by the joint drive by means of the at least two drive units 42c, 44c for the purpose of generating a vertical movement of the at least two sealing jaws 18c, 20c. In the process step 58c the drive connection element 94c and the further drive connection element 106c are driven to move translationally along the direction parallel to the translationally movement axis of the drive connection element 94c and the further drive connection element 106c by the joint drive by means of the at least two drive units 42c, 44c for the purpose of generating a vertical movement of the at least two sealing jaws 18c, 20c. In the process step 58c a drive force generated by the at least two drive units 42c, 44c, in particular a movement of the drive connection element 94c and the further drive connection element 106c, is converted by the crank slider mechanism 100c into a horizontal and/or vertical movement of the at least two sealing jaws 18c, 20c.

In the process step 58c the movement unit 36c, in particular the at least two movement elements 46c, 48c of the movement unit 36c, is driven in parallel by the at least two drive units 42c, 44c in order to generate a vertical movement of the at least two sealing jaws 18c, 20c. In the process step 58c the vertical movement of the at least two sealing jaws 18c, 20c is generated by a parallel drive of the drive connection element 94c and the further drive connection element 106c by means of the at least two drive units 42c, 44c. In the process step 58c the movement unit 36c, in particular the at least two movement elements 46c, 48c of the movement unit 36c, is driven in opposite directions by the at least two drive units 42c, 44c in order to generate a horizontal movement of the at least two sealing jaws 18c, 20c. In the process step 58c a horizontal movement of the at least two sealing jaws 18c, 20c is generated by a non-parallel drive of the drive connection element 94c and the further drive connection element 106c by means of the at least two drive units 42c, 44c. In a further process step 114c a packaging material is sealed by the at least two sealing jaws 18c, 20c.

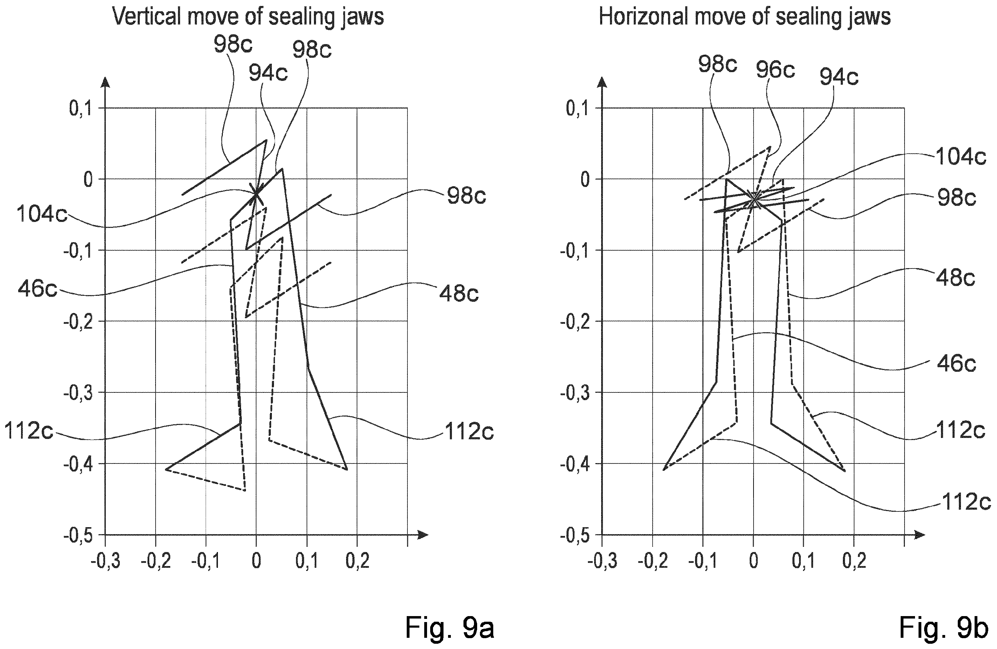

Figure 9a schematically shows the movement unit 36c in two different vertical positions of the at least two sealing jaws 18c, 20c. The movement unit 36c shown in dashed lines is an arrangement of the movement unit 36c in a first vertical position of the at least two sealing jaws 18c, 20c. The movement unit 36c shown in continuous lines is an arrangement of the movement element 36c in a second vertical position of the at least two sealing jaws 18c, 20c. A relative arrangement of the two slider elements 98c, the additional movement element 96c and the drive connection element 94c of the movement unit 36c is fixed during a merely vertical movement of the at least two sealing jaws 18c, 20c.

Figure 9b schematically shows the movement unit 36c in two different horizontal positions of the at least two sealing jaws 18c, 20c relative to each other. The movement unit 36c shown in dashed lines is an arrangement of the movement unit 36c in a first horizontal position of the at least two sealing jaws 18c, 20c. The movement unit 36c shown in continuous lines is an arrangement of the movement element 36c in a second horizontal position of the at least two sealing jaws 18c, 20c, in particular in the sealing position. A relative arrangement of the two slider elements 98c, the additional movement element 96c and the drive connection element 94c of the movement unit 36c is changed during a horizontal movement of the at least two sealing jaws 18c, 20c relative to each other.

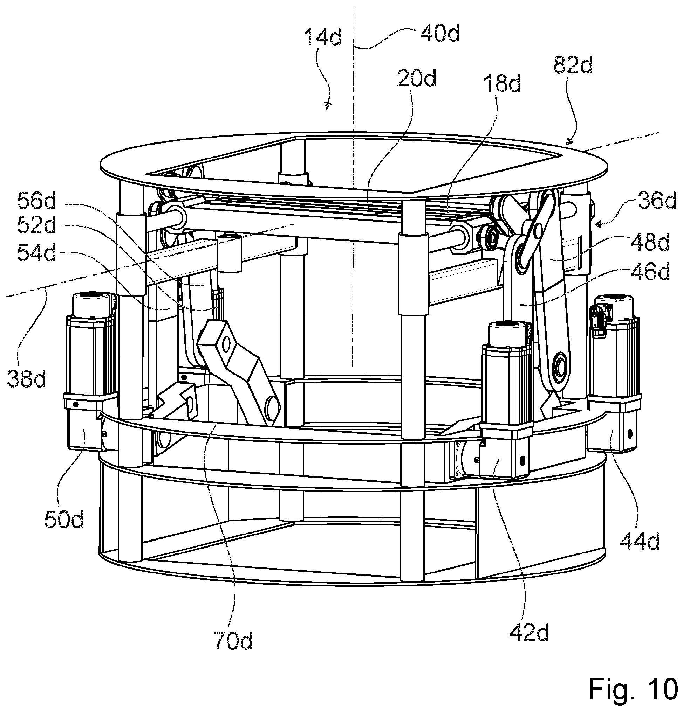

In figure 10 a transverse sealing device 14d is shown for a sealing of a package or a packaging material. The transverse sealing device 14d comprises at least two sealing jaws 18d, 20d. The transverse sealing device 14d comprises at least one movement unit 36d, which is configured for moving the at least two sealing jaws 18d, 20d translationally relative to each other along a direction parallel to a horizontal movement axis 38d of a guide unit 82d of the transverse sealing device 14d and for moving the at least two sealing jaws 18d, 20d translationally along a direction parallel to a vertical movement axis 40d of the guide unit 82d of the transverse sealing device 14d.

The movement unit 36d comprises at least four movement elements 46d, 48d, 54d, 56d. Each of four drive units 42d, 44d, 50d, 52d is mechanically connected to one of the four movement elements 46d, 48d, 54d, 56d for driving the four movement elements 46d, 48d, 54d, 56d so as to generate a vertical and/or horizontal movement of the at least two sealing jaws 18d, 20d. The at least four movement elements 46d, 48d, 54d, 56d correspond to the at least two movement elements 46c, 48c and the at least two further movement elements 54c, 56c of the embodiment of figures 6 to 8. The four movement elements 46d, 48d, 54d, 56d are free from any direct connection to each other, in particular via a drive shaft, or the like. The four drive units 42d, 44d, 50d, 52d are arranged in an at least substantially positionally fixed manner relative to a frame 70d of the transverse sealing device 14d. The movement unit 36d is arranged at least substantially completely sideways relative to the at least two sealing jaws 18d, 20d, at least viewed in a direction parallel to the horizontal movement axis 38d of the guide unit 82d of the transverse sealing device 14d. The movement unit 36d is arranged sideways relative to the at least two sealing jaws 18d, 20d in such a way that the movement unit 36c is positioned at least substantially completely within a proximity area of the at least two sealing jaws 18d, 20d, at least viewed in the direction parallel to the horizontal movement axis 38d of the guide unit 82d of the transverse sealing device 14d. The at least two sealing jaws 18d, 20d are pullable into a sealing position by means of the movement unit 36d.

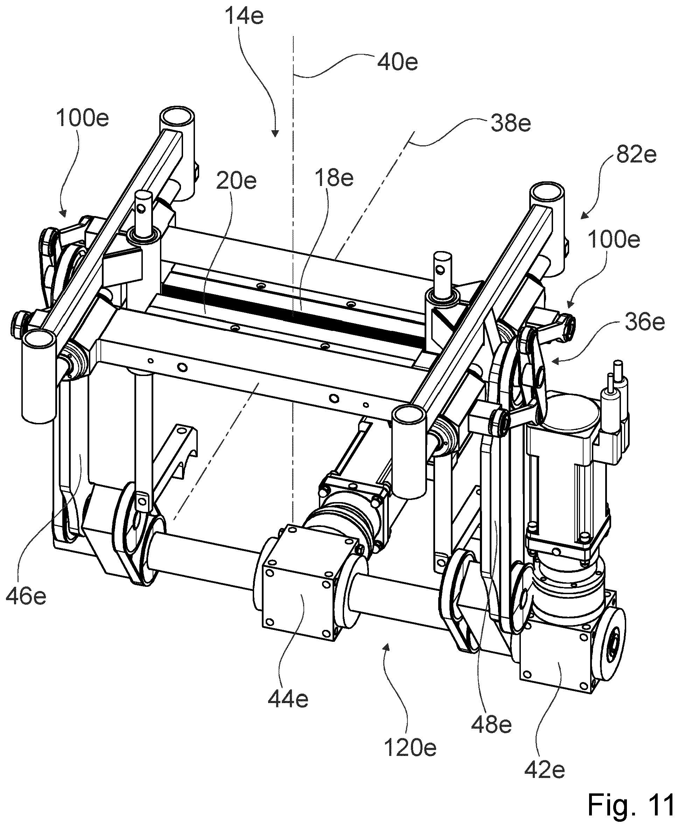

In figure 11 a transverse sealing device 14e is shown for a sealing of a package or a packaging material. The transverse sealing device 14e comprises at least two sealing jaws 18e, 20e. The transverse sealing device 14e comprises at least one movement unit 36e, which is configured for moving the at least two sealing jaws 18e, 20e translationally relative to each other along a direction parallel to a horizontal movement axis 38e of a guide unit 82e of the transverse sealing device 14e and for moving the at least two sealing jaws 18e, 20e translationally along a direction parallel to a vertical movement axis 40e of the guide unit 82e of the transverse sealing device 14e, in particular relative to a frame (not shown here) of the transverse sealing device 14e.

The movement unit 36e comprises at least two crank slider mechanisms 100e, which are in particular arranged on averted sides of the at least two sealing jaws 18e, 20e. The movement unit 36e comprises a belt construction 120e for transmitting a driving force generatable by a drive unit 44e of the transverse sealing device 14e to the two crank slider mechanisms 100e in order to generate a horizontal movement of the at least two sealing jaws 18e, 20e relative to each other. The transverse sealing device 14e comprises a further drive unit 44e for generating a vertical movement of the at least two sealing jaws 18e, 20e, in particular relative to the frame. The movement unit 36e comprises two movement elements 46e, 48e, implemented as arms, for converting the driving force of the further drive unit 42e into a vertical movement of the at least two sealing jaws 18e, 20e.

The movement unit 36e is arranged at least substantially completely sideways relative to the at least two sealing jaws 18e, 20e, at least viewed in a direction parallel to the horizontal movement axis 38e of the guide unit 82e of the transverse sealing device 14e. The movement unit 36e is arranged sideways relative to the at least two sealing jaws 18e, 20e in such a way that the movement unit 36e is positioned at least substantially completely within a proximity area of the at least two sealing jaws 18e, 20e, at least viewed in the direction parallel to the horizontal movement axis 38e of the guide unit 82e of the transverse sealing device 14e. The at least two sealing jaws 18e, 20e are pullable into a sealing position by means of the movement unit 36e. The drive unit 44e and the further drive unit 42e are arranged in an at least substantially positionally fixed manner relative to the frame of the transverse sealing device 14e.

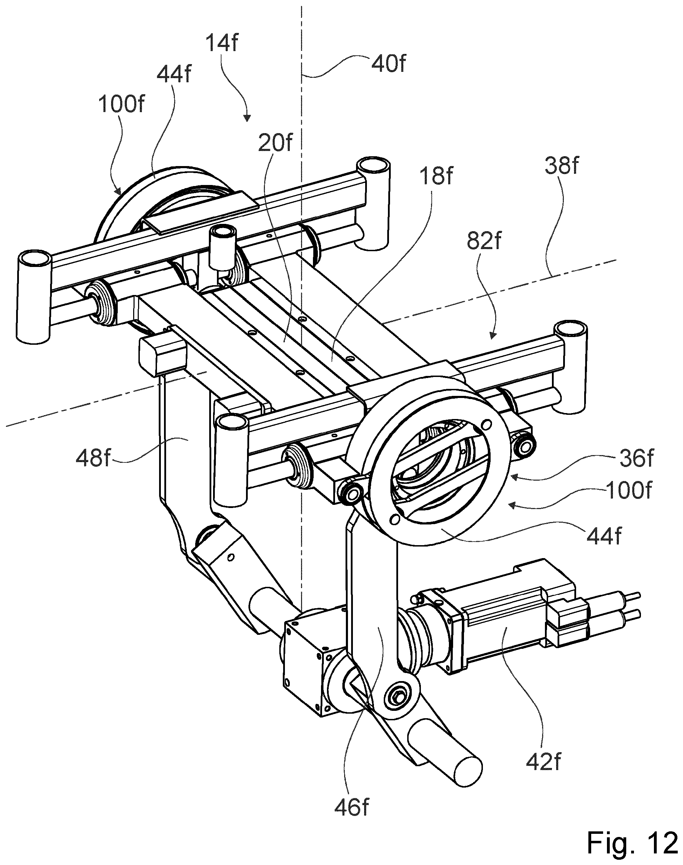

In figure 12 a transverse sealing device 14f is shown for a sealing of a package or a packaging material. The transverse sealing device 14f comprises at least two sealing jaws 18f, 20f. The transverse sealing device 14f comprises at least one movement unit 36f, which is configured for moving the at least two sealing jaws 18f, 20f translationally relative to each other along a direction parallel to a horizontal movement axis 38f of a guide unit 82f of the transverse sealing device 14f and for moving the at least two sealing jaws 18f, 20f translationally along a direction parallel to a vertical movement axis 40f of the guide unit 82f of the transverse sealing device 14f, in particular relative to a frame (not shown here) of the transverse sealing device 14f.

The movement unit 36f comprises at least two crank slider mechanisms 100f, which are in particular arranged on averted sides of the at least two sealing jaws 18f, 20f. The transverse sealing device 14f comprises two drive units 44f, wherein one of the two drive units 44f is arranged at one of the two crank slider mechanisms 100f. The two drive units 44f are configured for driving the two crank slider mechanisms 100f in order to generate a horizontal movement of the at least two sealing jaws 18f, 20f relative to each other. The two drive units 44f are attached to the two sealing jaws 18f, 20f in such a way that the at least two drive units 44f are moved along a direction parallel to a vertical movement axis of the at least two sealing jaws 18f, 20f relative to the frame. The transverse sealing device 14f comprises at least one further drive unit 42f for generating a driving force in order to move the at least two sealing jaws 18f, 20f along a direction parallel to the vertical movement axis 40f. The further drive unit 42f is arranged in an at least substantially positionally fixed manner relative to the frame. The movement unit 36f comprises two movement elements 46f, 48f configured for converting a driving force of the further drive unit 42f into a vertical movement of the at least two sealing jaws 18f, 20f.

The movement unit 36f is arranged at least substantially completely sideways relative to the at least two sealing jaws 18f, 20f, at least viewed in a direction parallel to the horizontal movement axis 38f of the guide unit 82f of the transverse sealing device 14f. The movement unit 36f is arranged sideways relative to the at least two sealing jaws 18f, 20f in such a way that the movement unit 36f is positioned at least substantially completely within a horizontal movement area of the guide unit 82f of the transverse sealing device 14f, at least viewed in the direction parallel to the horizontal movement axis 38f of the guide unit 82f of the transverse sealing device 14f. The at least two sealing jaws 18f, 20f are pullable into a sealing position by means of the movement unit 36f.

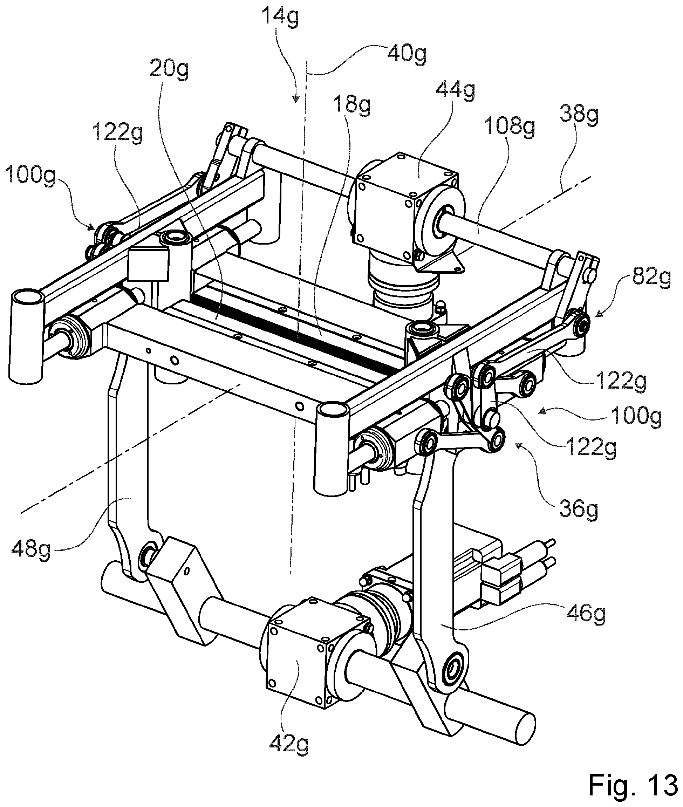

In figure 13 a transverse sealing device 14g is shown for a sealing of a package or a packaging material. The transverse sealing device 14g comprises at least two sealing jaws 18g, 20g. The transverse sealing device 14g comprises at least one movement unit 36g, which is configured for moving the at least two sealing jaws 18g, 20g translationally relative to each other along a direction parallel to a horizontal movement axis 38g of a guide unit 82g of the transverse sealing device 14g and for moving the at least two sealing jaws 18g, 20g translationally along a direction parallel to a vertical movement axis 40g of the guide unit 82g of the transverse sealing device 14g, in particular relative to a frame (not shown here) of the transverse sealing device 14g.

The movement unit 36g comprises at least two crank slider mechanisms 100g, which are in particular arranged on averted sides of the at least two sealing jaws 18g, 20g. The transverse sealing device 14g comprises a drive unit 44g for generating a driving force so as to move the at least two sealing jaws 18g, 20g horizontally. The drive unit 44g is arranged relative to the two sealing jaws 18g, 20g in such a way that the drive unit 44g is moved along with a vertical movement of the at least two sealing jaws 18g, 20g relative to the frame. The transverse sealing device 14g comprises at least one further drive unit 42g for generating a driving force so as to move the at least two sealing jaws 18g, 20g along the direction parallel to the vertical movement axis 40g. The further drive unit 42g is arranged in an at least substantially positionally fixed manner relative to the frame. The movement unit 36g comprises two movement elements 46g, 48g for converting a driving force of the further drive unit 42g into a vertical movement of the at least two sealing jaws 18g, 20g. The drive unit 44g comprises at least one drive shaft 108g, which is connected to the two crank slider mechanisms 100g, in particular via additional movement elements 122g of the movement unit 36g.

The movement unit 36g is arranged at least substantially completely sideways relative to the at least two sealing jaws 18g, 20g, at least viewed in a direction parallel to the horizontal movement axis 38g of the guide unit 82g of the transverse sealing device 14g. The movement unit 36g is arranged sideways relative to the at least two sealing jaws 18g, 20g in such a way that the movement unit 36g is positioned at least substantially completely within a proximity area of the at least two sealing jaws 18g, 20g, at least viewed in the direction parallel to the horizontal movement axis 38g of the guide unit 82g of the transverse sealing device 14g. The at least two sealing jaws 18g, 20g are pullable into a sealing position by means of the movement unit 36g.

## Claims

1. Vertical form fill sealing machine (10a - 10g) comprising a machine frame (12a -12g),at least one transverse sealing device (14a - 14g) for a sealing of a packaging material transversely, wherein the transverse sealing device (14a - 14g) is mounted on the machine frame (12a - 12g) such that it can be rotated around a rotation axis (16a -16g) of the transverse sealing device (14a - 14g) as a whole, and a guide unit (32a - 32g) to guide the rotation of the transverse sealing device (14a - 14g) around the rotation axis (16a -16g) as a whole, wherein the guide unit (32a - 32g) comprises at least one guide element (124a - 124g) that delimits at least partially a circular cylindrical receiving area (126a - 126g) within which the transverse sealing device (14a - 14g) is at least substantially completely arranged, wherein the transverse sealing device (14a - 14g) comprises at least one movement unit (36a - 36g), at least two sealing jaws (18a - 18g; 20a-20g) and at least one guide unit (82a - 82g) to guide the at least two sealing jaws (18a - 18g, 20a 20g) during a movement, wherein the at least one movement unit (36a - 36g) is provided for moving the at least two sealing jaws (18a - 18g; 20a 20g) along a horizontal movement axis (38a - 38g) of the guide unit (82a - 82g) of the transverse sealing device (14a - 14g) and for moving the at least two sealing jaws (18a - 18g; 20a 20g) along a vertical movement axis (40a - 40g) of the guide unit (82a - 82g) of the transverse sealing device (14a -14g), wherein the transverse sealing device (14a - 14g) comprises at least two drive units (42a - 42g, 44a - 44g) for driving the movement unit (36a - 36g) so as to generate a horizontal movement and/or a vertical movement of the at least two sealing jaws (18a - 18g; 20a - 20g) relative to a frame (70a - 70g) of the transverse sealing device (14a - 14g) and/or relative to the machine frame (12a -12g), wherein the guide unit (82a - 82g) has one or more bearing points, in which the frame (70a - 70g) of the transverse sealing device (14a - 14g) is movably connected to the guide unit (82a - 82g), **characterized in that** all components of the transverse sealing device (14a - 14g) other than the frame (70a - 70g) are mounted on the frame (70a - 70g) of the transverse sealing device (14a - 14g), wherein the frame (70a - 70g) of the transverse sealing device (14a - 14g) is arranged rotatably on the machine frame (12a -12g), wherein all components of the transverse sealing device (14a - 14g) are simultaneously rotatable around the rotation axis (16a - 16g) of the transverse sealing device (14a - 14g) relative to the machine frame (12a -12g).

2. Vertical form fill sealing machine (10a - 10g) according to Claim 1, **characterized in that** a main extension axis (136a - 136g) of the circular cylindrical receiving area (126a - 126g) is arranged within a proximity area of the rotation axis (16a -16g) of the transverse sealing device (14a - 14g).

3. Vertical form fill sealing machine (10a- 10g) according to Claim 1 or 2, **characterized in that** a main extension axis (136a - 136g) of the circular cylindrical receiving area (126a - 126g) is located in a proximity area of a sealing plane (22a - 22g) of the at least two sealing jaws (18a - 18g, 20a - 20g).

4. Vertical form fill sealing machine (10a - 10g) according to one of the preceding claims, **characterized in that** the transverse sealing device (14a - 14g) has a central axis (138a - 138g), which in particular intersects a center point of the transverse sealing device (14a - 14g), wherein a main extension axis (136a - 136g) of the circular cylindrical receiving area (126a - 126g) is arranged in a proximity area of the central axis (138a - 138g).

5. Vertical form fill sealing machine (10a - 10g) according to one of the preceding claims, **characterized in that** the guide element (124a - 124g) defines a circle-shaped guideway (140a - 140g), wherein the transverse sealing device (14a - 14g) is arranged at least substantially completely within a circular cylinder (142a - 142g) corresponding to the circle-shaped guideway (140a - 140g).

6. Vertical form fill sealing machine (10a - 10g) according to one of the preceding claims, **characterized in that** the transverse sealing device (14a - 14g) has at least partially a circle-shaped outside contour, at least viewed in a direction parallel to the rotation axis (16a - 16g).

7. Vertical form fill sealing machine (10a - 10g) according to one of the preceding claims, **characterized in that** the guide element (124a - 124g) encompasses the transverse sealing device (14a - 14g) in at least one rotational position of the transverse sealing device (14a - 14g) relative to the guide element (124a - 124g) by at least 75° along a circumferential direction of the transverse sealing device (14a - 14g).

8. Vertical form fill sealing machine (10a - 10g) according to one of the preceding claims, **characterized by** a filling station (24a - 24g), comprising at least one filling tube (26a - 26g) for filling a package with content, wherein a main extension axis (136a - 136g) of the circular cylindrical receiving area (126a - 126g) is arranged within a proximity area of a central axis (28a - 28g) of the filling tube (26a - 26g), and is in particular equivalent to the central axis (28a - 28g) of the filling tube (26a - 26g).

9. Vertical form fill sealing machine (10a - 10g) according to one of the preceding claims, **characterized in that** the guide element (124a - 124g) has a guide groove (132a - 132g) with an undercut.

10. Method for operating the vertical form fill sealing machine (10a -10g) according to one of the preceding claims, **characterized in that** at least two sealing jaws (18a - 18g; 20a - 20g) of the transverse sealing device (14a - 14g) of the vertical form fill sealing machine (10a - 10g) are moved along the vertical movement axis (40a - 40g) of the guide unit (82a - 82g) of the transverse sealing device (14a - 14g) and/or along the horizontal movement axis (38a - 38g) of the guide unit (82a - 82g) of the transverse sealing device (14a - 14g) via the movement unit (36a - 36g) of the transverse sealing device (14a - 14g), wherein the transverse sealing device (14a - 14g) is at least substantially completely arranged in the circular cylindrical receiving area (126a - 126g) delimited at least partially by at least one guide element (124a - 124g) of the guide unit (82a - 82g), wherein in one process step (34a) the transverse sealing device (14a - 14g) is rotated as a whole around the rotation axis (16a -16g) of the transverse sealing device (14a - 14g) relative to the machine frame (12a -12g) of the vertical form fill sealing machine (10a - 10g).

## Patentansprüche

1. Vertikale formfüllende Versiegelungsmaschine (10a - 10g), umfassend ein Maschinengestell (12a - 12g), mindestens eine Quersiegelvorrichtung (14a - 14g) zum Quersiegeln eines Verpackungsmaterials, wobei die Quersiegelvorrichtung (14a - 14g) derart an dem Maschinengestell (12a - 12g) montiert ist, dass sie sich als Ganzes um eine Drehachse (16a - 16g) der Quersiegelvorrichtung (14a - 14g) drehen kann, und eine Führungseinheit (32a - 32g), um die Drehung der Quersiegelvorrichtung (14a - 14g) als Ganzes um die Drehachse (16a - 16g) zu führen, wobei die Führungseinheit (32a - 32g) mindestens ein Führungselement (124a - 124g) umfasst, das einen kreiszylindrischen Aufnahmebereich (126a - 126g) mindestens teilweise begrenzt, innerhalb dessen die Quersiegelvorrichtung (14a - 14g) mindestens im Wesentlichen vollständig angeordnet ist, wobei die Quersiegelvorrichtung (14a - 14g) mindestens eine Bewegungseinheit (36a - 36g), mindestens zwei Siegelbacken (18a - 18g; 20a - 20g) und mindestens eine Führungseinheit (82a - 82g), um die mindestens zwei Siegelbacken (18a - 18g, 20a - 20g) während einer Bewegung zu führen, umfasst, wobei die mindestens eine Bewegungseinheit (36a - 36g) zum Bewegen der mindestens zwei Siegelbacken (18a - 18g; 20a 20g) entlang einer horizontalen Bewegungsachse (38a - 38g) der Führungseinheit (82a - 82g) der Quersiegelvorrichtung (14a - 14g) und zum Bewegen der mindestens zwei Siegelbacken (18a - 18g; 20a 20g) entlang einer vertikalen Bewegungsachse (40a - 40g) der Führungseinheit (82a - 82g) der Quersiegelvorrichtung (14a - 14g) bereitgestellt ist, wobei die Quersiegelvorrichtung (14a - 14g) mindestens zwei Antriebseinheiten (42a - 42g, 44a - 44g) zum Antreiben der Bewegungseinheit (36a - 36g) umfasst, um eine horizontale Bewegung und/oder eine vertikale Bewegung der mindestens zwei Siegelbacken (18a - 18g; 20a - 20g) relativ zu einem Gestell (70a - 70g) der Quersiegelvorrichtung (14a - 14g) und/oder relativ zu dem Maschinengestell (12a - 12g) zu erzeugen, wobei die Führungseinheit (82a - 82g) eine oder mehrere Lagerstellen aufweist, in denen das Gestell (70a - 70g) der Quersiegelvorrichtung (14a - 14g) mit der Führungseinheit (82a - 82g) beweglich verbunden ist, **dadurch gekennzeichnet, dass** alle Komponenten der Quersiegelvorrichtung (14a - 14g) mit Ausnahme des Gestells (70a - 70g) an dem Gestell (70a - 70g) der Quersiegelvorrichtung (14a - 14g) montiert sind, wobei das Gestell (70a - 70g) der Quersiegelvorrichtung (14a - 14g) an dem Maschinengestell (12a - 12g) drehbar angeordnet ist, wobei alle Komponenten der Quersiegelvorrichtung (14a - 14g) gleichzeitig um die Drehachse (16a - 16g) der Quersiegelvorrichtung (14a - 14g) relativ zu dem Maschinengestell (12a - 12g) drehbar sind.

2. Vertikale formfüllende Versiegelungsmaschine (10a - 10g) nach Anspruch 1, **dadurch gekennzeichnet, dass** eine Haupterstreckungsachse (136a - 136g) des kreiszylindrischen Aufnahmebereichs (126a - 126g) innerhalb eines Nahbereichs der Drehachse (16a - 16g) der Quersiegelvorrichtung (14a - 14g) angeordnet ist.

3. Vertikale formfüllende Versiegelungsmaschine (10a - 10g) nach Anspruch 1 oder 2, **dadurch gekennzeichnet, dass** eine Haupterstreckungsachse (136a - 136g) des kreiszylindrischen Aufnahmebereichs (126a - 126g) in einem Nahbereich einer Siegelebene (22a - 22g) der mindestens zwei Siegelbacken (18a - 18g, 20a - 20g) liegt.

4. Vertikale formfüllende Versiegelungsmaschine (10a - 10g) nach einem der vorstehenden Ansprüche, **dadurch gekennzeichnet, dass** die Quersiegelvorrichtung (14a - 14g) eine Mittelachse (138a - 138g) aufweist, die insbesondere einen Mittelpunkt der Quersiegelvorrichtung (14a - 14g) schneidet, wobei eine Haupterstreckungsachse (136a - 136g) des kreiszylindrischen Aufnahmebereichs (126a - 126g) in einem Nahbereich der Mittelachse (138a - 138g) angeordnet ist.

5. Vertikale formfüllende Versiegelungsmaschine (10a - 10g) nach einem der vorstehenden Ansprüche, **dadurch gekennzeichnet, dass** das Führungselement (124a - 124g) eine kreisförmige Führungsbahn (140a - 140g) definiert, wobei die Quersiegelvorrichtung (14a - 14g) mindestens im Wesentlichen vollständig innerhalb eines der kreisförmigen Führungsbahn (140a - 140g) entsprechenden Kreiszylinders (142a - 142g) angeordnet ist.

6. Vertikale formfüllende Versiegelungsmaschine (10a - 10g) nach einem der vorstehenden Ansprüche, **dadurch gekennzeichnet, dass** die Quersiegelvorrichtung (14a - 14g) mindestens teilweise eine kreisförmige Außenkontur aufweist, mindestens in einer Richtung parallel zu der Drehachse (16a - 16g) betrachtet.

7. Vertikale formfüllende Versiegelungsmaschine (10a - 10g) nach einem der vorstehenden Ansprüche, **dadurch gekennzeichnet, dass** das Führungselement (124a - 124g) die Quersiegelvorrichtung (14a - 14g) in mindestens einer Drehposition der Quersiegelvorrichtung (14a - 14g) relativ zu dem Führungselement (124a - 124g) um mindestens 75° entlang einer Umfangsrichtung der Quersiegelvorrichtung (14a - 14g) umgreift.

8. Vertikale formfüllende Versiegelungsmaschine (10a - 10g) nach einem der vorstehenden Ansprüche, **gekennzeichnet durch** eine Füllstation (24a - 24g), umfassend mindestens ein Füllrohr (26a - 26g) zum Befüllen einer Verpackung mit Inhalt, wobei eine Haupterstreckungsachse (136a - 136g) des kreiszylindrischen Aufnahmebereichs (126a - 126g) innerhalb eines Nahbereichs einer Mittelachse (28a - 28g) des Füllrohrs (26a - 26g) angeordnet ist und insbesondere der Mittelachse (28a - 28g) des Füllrohrs (26a - 26g) entspricht.

9. Vertikale formfüllende Versiegelungsmaschine (10a - 10g) nach einem der vorstehenden Ansprüche, **dadurch gekennzeichnet, dass** das Führungselement (124a - 124g) eine Führungsnut (132a - 132g) mit einer Hinterschneidung aufweist.

10. Verfahren zum Betreiben der vertikalen formfüllenden Versiegelungsmaschine (10a - 10g) nach einem der vorstehenden Ansprüche, **dadurch gekennzeichnet, dass** mindestens zwei Siegelbacken (18a - 18g; 20a - 20g) der Quersiegelvorrichtung (14a - 14g) der vertikalen formfüllenden Versiegelungsmaschine (10a - 10g) entlang der vertikalen Bewegungsachse (40a - 40g) der Führungseinheit (82a - 82g) der Quersiegelvorrichtung (14a - 14g) und/oder entlang der horizontalen Bewegungsachse (38a - 38g) der Führungseinheit (82a - 82g) der Quersiegelvorrichtung (14a - 14g) über die Bewegungseinheit (36a - 36g) der Quersiegelvorrichtung (14a - 14g) bewegt werden, wobei die Quersiegelvorrichtung (14a - 14g) mindestens im Wesentlichen vollständig in dem kreiszylindrischen Aufnahmebereich (126a - 126g) angeordnet ist, der mindestens teilweise durch mindestens ein Führungselement (124a - 124g) der Führungseinheit (82a - 82g) begrenzt ist, wobei in einem Prozessschritt (34a) die Quersiegelvorrichtung (14a - 14g) als Ganzes um die Drehachse (16a - 16g) der Quersiegelvorrichtung (14a - 14g) relativ zu dem Maschinengestell (12a - 12g) der vertikalen formfüllenden Versiegelungsmaschine (10a - 10g) gedreht wird.

## Revendications

1. Machine d'étanchéité à remplissage de forme verticale (10a - 10g) comprenant un bâti de machine (12a - 12g), au moins un dispositif d'étanchéité transversal (14a - 14g) pour sceller un matériau d'emballage transversalement, le dispositif d'étanchéité transversal (14a - 14g) étant monté sur le bâti de machine (12a - 12g) de telle sorte qu'il peut être tourné autour d'un axe de rotation (16a -16g) du dispositif d'étanchéité transversal (14a - 14g) dans son ensemble, et une unité de guidage (32a - 32g) pour guider la rotation du dispositif d'étanchéité transversal (14a - 14g) autour de l'axe de rotation (16a - 16g) dans son ensemble, l'unité de guidage (32a - 32g) comprenant au moins un élément de guidage (124a - 124g) qui délimite au moins partiellement une zone de réception cylindrique au moins partiellement circulaire (126a - 126g) à l'intérieur de laquelle le dispositif d'étanchéité transversal (14a - 14g) est au moins sensiblement complètement agencé, le dispositif d'étanchéité transversal (14a - 14g) comprenant au moins une unité de déplacement (36a - 36g), au moins deux mâchoires d'étanchéité (18a - 18g ; 20a - 20g) et au moins une unité de guidage (82a - 82g) pour guider les au moins deux mâchoires d'étanchéité (18a - 18 g, 20a - 20g) pendant un déplacement, l'au moins une unité de déplacement (36a - 36g) étant fournie pour déplacer les au moins deux mâchoires d'étanchéité (18a - 18g ; 20a - 20g) le long d'un axe de déplacement horizontal (38a - 38g) de l'unité de guidage (82a - 82g) du dispositif d'étanchéité transversal (14a - 14g) et pour déplacer les au moins deux mâchoires d'étanchéité (18a - 18g ; 20a - 20g) le long d'un axe de déplacement vertical (40a - 40g) de l'unité de guidage (82a - 82g) du dispositif d'étanchéité transversal (14a - 14g), le dispositif d'étanchéité transversal (14a - 14g) comprenant au moins deux unités d'entraînement (42a - 42g, 44a - 44g) pour entraîner l'unité de déplacement (36a - 36g) de manière à générer un déplacement horizontal et/ou un déplacement vertical des au moins deux mâchoires d'étanchéité (18a - 18g) ; 20a - 20g) par rapport à un bâti (70a - 70g) du dispositif d'étanchéité transversal (14a - 14g) et/ou par rapport au bâti de machine (12a - 12g), l'unité de guidage (82a - 82g) ayant un ou plusieurs points d'appui, dans laquelle le bâti (70a - 70g) du dispositif d'étanchéité transversal (14a - 14g) est relié de manière mobile à l'unité de guidage (82a - 82g), **caractérisée en ce que** tous les composants du dispositif d'étanchéité transversal (14a - 14g) autres que le bâti (70a - 70g) sont montés sur le bâti (70a - 70g) du dispositif d'étanchéité transversal (14a - 14g), le bâti (70a - 70g) du dispositif d'étanchéité transversal (14a - 14g) étant agencé de manière rotative sur le bâti de machine (12a - 12g), tous les composants du dispositif d'étanchéité transversal (14a - 14g) pouvant être tournés simultanément autour de l'axe de rotation (16a - 16g) du dispositif d'étanchéité transversal (14a - 14g) par rapport au bâti de machine (12a - 12g).

2. Machine d'étanchéité à remplissage de forme verticale (10a - 10g) selon la revendication 1, **caractérisée en ce qu'un** axe d'extension principal (136a - 136g) de la zone de réception cylindrique circulaire (126a - 126g) est agencé à l'intérieur d'une zone de proximité de l'axe de rotation (16a - 16g) du dispositif d'étanchéité transversal (14a - 14g).

3. Machine d'étanchéité à remplissage de forme verticale (10a- 10g) selon la revendication 1 ou 2, **caractérisée en ce qu'**un axe d'extension principal (136a - 136g) de la zone de réception cylindrique circulaire (126a - 126g) est situé dans une zone de proximité d'un plan d'étanchéité (22a - 22g) des au moins deux mâchoires d'étanchéité (18a - 18g, 20a - 20g).

4. Machine d'étanchéité à remplissage de forme verticale (10a - 10g) selon l'une des revendications précédentes, **caractérisée en ce que** le dispositif d'étanchéité transversal (14a - 14g) a un axe central (138a - 138g), qui coupe en particulier un point central du dispositif d'étanchéité transversal (14a - 14g), un axe d'extension principal (136a - 136g) de la zone de réception cylindrique circulaire (126a - 126g) étant agencé dans une zone de proximité de l'axe central (138a - 138g).

5. Machine d'étanchéité à remplissage de forme verticale (10a - 10g) selon l'une des revendications précédentes, **caractérisée en ce que** l'élément de guidage (124a - 124g) définit une voie de guidage en forme de cercle (140a - 140g), le dispositif d'étanchéité transversal (14a - 14g) étant agencé au moins sensiblement à l'intérieur d'un cylindre circulaire (142a - 142g) correspondant à la voie de guidage en forme de cercle (140a - 140g).

6. Machine d'étanchéité à remplissage de forme verticale (10a - 10g) selon l'une des revendications précédentes, **caractérisée en ce que** le dispositif d'étanchéité transversal (14a - 14g) a au moins partiellement un contour extérieur en forme de cercle, au moins vu dans une direction parallèle à l'axe de rotation (16a - 16g).

7. Machine d'étanchéité à remplissage de forme verticale (10a - 10g) selon l'une des revendications précédentes, **caractérisée en ce que** l'élément de guidage (124a - 124g) englobe le dispositif d'étanchéité transversal (14a - 14g) dans au moins une position de rotation du dispositif d'étanchéité transversal (14a - 14g) par rapport à l'élément de guidage (124a - 124g) d'au moins 75° le long d'une direction circonférentielle du dispositif d'étanchéité transversal (14a - 14g).

8. Machine d'étanchéité à remplissage vertical (10a - 10g) selon l'une des revendications précédentes, **caractérisée par** un poste de remplissage (24a - 24g), comprenant au moins un tube de remplissage (26a - 26g) pour remplir un emballage avec du contenu, un axe d'extension principal (136a - 136g) de la zone de réception cylindrique circulaire (126a - 126g) étant agencé à l'intérieur d'une zone de proximité d'un axe central (28a - 28g) du tube de remplissage (26a - 26g), et est en particulier équivalent à l'axe central (28a - 28g) du tube de remplissage (26a - 26g).

9. Machine d'étanchéité à remplissage de forme verticale (10a - 10g) selon l'une des revendications précédentes, **caractérisée en ce que** l'élément de guidage (124a - 124g) a une rainure de guidage (132a - 132g) avec une contre-dépouille.

10. Procédé de fonctionnement de la machine d'étanchéité à remplissage de forme verticale (10a -10g) selon l'une des revendications précédentes, **caractérisé en ce qu'**au moins deux mâchoires d'étanchéité (18a - 18g ; 20a - 20g) du dispositif d'étanchéité transversal (14a - 14g) de la machine d'étanchéité à remplissage de forme verticale (10a - 10g) sont déplacées le long de l'axe de déplacement vertical (40a - 40g) de l'unité de guidage (82a - 82g) du dispositif d'étanchéité transversal (14a - 14g) et/ou le long de l'axe de déplacement horizontal (38a - 38g) de l'unité de guidage (82a - 82g) du dispositif d'étanchéité transversal (14a - 14g) par l'intermédiaire de l'unité de déplacement (36a - 36g) du dispositif d'étanchéité transversal (14a - 14g), le dispositif d'étanchéité transversal (14a - 14g) étant agencé au moins sensiblement complètement dans la zone de réception cylindrique circulaire (126a - 126g) délimitée au moins partiellement par au moins un élément de guidage (124a - 124g) de l'unité de guidage (82a - 82g), le dispositif d'étanchéité transversal (14a - 14g) étant tourné dans son ensemble, au cours d'une étape du processus (34a), autour de l'axe de rotation (16a - 16g) du dispositif d'étanchéité transversal (14a - 14g) par rapport au bâti de machine (12a - 12g) de la machine d'étanchéité à remplissage de forme verticale (10a - 10g).
